(19) **Europäisches Patentamt**
**European Patent Office**
**Office européen des brevets**

(11) **EP 2 214 115 B1**

(12) **EUROPEAN PATENT SPECIFICATION**

(45) Date of publication and mention
of the grant of the patent:
**25.05.2011 Bulletin 2011/21**

(51) Int Cl.:
*G06F 21/00* (2006.01)     *H04L 29/06* (2006.01)
*G06F 17/30* (2006.01)

(21) Application number: **10151115.2**

(22) Date of filing: **19.01.2010**

(54) **Efficient application identification with network devices**

Effiziente Anwendungsidentifizierung mit Netzwerkgeräten

Identification efficace d'applications avec des dispositifs de réseau

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.01.2009 US 361364**

(43) Date of publication of application:
**04.08.2010 Bulletin 2010/31**

(73) Proprietor: **Juniper Networks, Inc.**
**Sunnyvale, CA 94089 (US)**

(72) Inventors:
• **Ma, Qingming**
**Santa Clara, CA 95056 (US)**
• **Burns, Bryan**
**Portland, OR 97212 (US)**
• **Oliveira, Ricardo**
**Los Angeles, CA 90025 (US)**

(74) Representative: **Harris, Ian Richard et al**
**D Young & Co LLP**
**120 Holborn**
**London EC1N 2DY (GB)**

(56) References cited:
**US-A1- 2006 242 123     US-A1- 2008 140 661**
**US-B1- 7 308 446**

• **XIAOFEI WANG ET AL: "Extraction of fingerprint from regular expression for efficient prefiltering" COMMUNICATIONS TECHNOLOGY AND APPLICATIONS, 2009. ICCTA '09. IEEE INTERNATIONAL CONFERENCE ON, IEEE, PISCATAWAY, NJ, USA, 16 October 2009 (2009-10-16), pages 221-226, XP031577563 ISBN: 978-1-4244-4816-6**

**Description**

**TECHNICAL FIELD**

The invention relates to computer networks and, more particularly, to providing services within computer networks.

**BACKGROUND**

A computer network is a collection of interconnected computing devices that exchange data and share resources. In a packet-based network, such as the Internet, the computing devices communicate data by dividing the data into small blocks called packets. The packets are individually routed across the network from a source device to a destination device. The destination device extracts the data from the packets and assembles the data into its original form. Dividing the data into packets enables the source device to resend only those individual packets that may be lost during transmission.

To facilitate delivery of data packets associated with certain types of network applications, network devices, referred to as routers, within the computer network may attempt to identify the type of network application to which the packet corresponds. For example, a router may inspect a data packet to determine whether the packet corresponds to an HyperText Transfer Protocol (HTTP) application, a File Transfer Protocol (FTP) application or any other type of network application. Depending on the determined network application, the router may provide, for example, a higher level or Quality of Service (QoS) class to the packet when compared to packets determined to correspond to other network applications. In this respect, the router may forward packets associated with the higher QoS class faster than those forwarded with relatively lower QoS classes to facilitate delivery of packets associated with certain types of network applications.

Other network devices, such as network security devices referred to as Intrusion Detection and Prevention (IDP) devices, within the computer network may also inspect the data packets to determine to which one of a plurality of network applications the data packets correspond. The IDP device may perform this inspection to limit application of attack definitions. In other words, the IDP device may select a subset of attack definitions from a full set of attack definitions that each identify network attacks relevant to a particular network application and disregard those attack definitions that identify network attacks irrelevant to the network application. In this respect, identifying the network application to which the data packet corresponds may substantially reduce the computational resources required when performing intrusion detection and prevention by reducing the number of attack patterns that need be applied to any given packet.

This process of determining the network application to which the packet corresponds is referred to as application identification, and as noted above, application identification may be implemented by a number of network devices to, as the above two examples illustrate, facilitate packet forwarding and intrusion detection and prevention. In the past, various network devices implemented a crude form of application identification by attempting to identify to which of the plurality of applications the packet corresponds based on port numbers and protocol identifiers stored in a header of each packet. For example, a router may inspect an Internet Protocol (IP) header of a packet to determine a port number of 80 and protocol of IP. These port numbers / protocol were often statically associated with a given application, where, as one example, the port number of 80 and the protocol IP was and still is statically associated with the HTTP application. Upon determining this port number / protocol combination, the network device accessed a list or other data structure defining these static associations to determine the corresponding application, e.g., the HTTP application for the port 80 / IP protocol combination.

As computer networks have evolved however, static associations between port number / protocol combinations and network applications was seen as a security vulnerability. Hackers and other malicious users may, for example, intercept these packets and, with knowledge of the static associations, gain a better understanding of the applications running within the computer network due given the static associations. The hackers then may target their attacks at these particular applications thereby increasing the rate of success of these attacks.

As a result, emerging network applications, such as Voice over Internet Protocol (VoIP), have begun assigning port numbers dynamically, thereby eliminating static associations between port numbers and network applications. Moreover, these emerging network applications are often time sensitive and require higher qualities of service. In response, routers and other network security devices have begun performing more sophisticated and dynamic application identification that involves detailed pattern matching schemes. These pattern matching schemes may inspect more than just port numbers and protocol identifiers and often inspect the packet payload for particular character patterns in an attempt to identify an application to which each packet corresponds. Yet, application identification involving these more sophisticated pattern matching schemes are typically more computationally expensive and time consuming than the static port / protocol application identification, which may generally detract from the benefits achieved by application identification.

## SUMMARY

According to the invention there are provided a method according to claims 1 and 11, a network device according to claims 9 and 14 and a computer readable medium according to claims 10 and 15. In general, example embodiments of the invention are described for more efficiently implementing application identification within network devices, such as routers and IDP devices. In particular, a network device may implement the techniques to reduce consumption of memory by data structures used in performing the more sophisticated pattern matching and improve traversal of and, thereby the speed with which pattern matching occurs using, the data structure. The data structure may comprise a graph data structure having a plurality of interconnected nodes. This graph data structure may implement a Deterministic Finite Automata (DFA) and the network device may store a first DFA referred to as a group DFA and a second DFA referred to as an individual DFA. The network device may store these two DFAs within a memory or other storage device and access one or both of these DFAs in response to receiving a packet. These two DFAs generated in accordance with the techniques described herein may consume significantly less memory than comparable DFAs used for detecting similar if not the same patterns, while also enable faster matching than these comparable DFAs by reducing the number nodes or states that need be traversed in order to match a given pattern.

In operation, the network device may include a control unit that receives data defining the group and individual DFAs from a user, such as a network administrator, or device, such as a provisioning system. The control unit stores this data defining the group and individual DFAs. The group DFA may include a DFA resulting from the merger of two other DFAs, at least one DFA referred to as a "non-explosive" DFA and at least one other DFA referred to as a "fingerprint" DFA (or "f-DFA," for short). The individual DFA comprises an "explosive" DFA that is associated to the group DFA by way of the merged f-DFA.

A computing device, such as a desktop computer or workstation, may generate the group and individual DFAs in accordance with the techniques described herein. In particular, a control unit of the computing device may receive a plurality of regular expressions that each defines a pattern. The control unit of the computing device may first parse each of these regular expressions into one or more parsed regular expressions, as each regular expression may define multiple sub-patterns, such as alternative sub-partitions connected by "OR" characters. The computing device may perform this initial parsing to extract the sub-patterns from each regular expression and instantiate these sub-patterns as separate parsed regular expressions. After determining the parsed regular expressions, the control unit of the computing device classifies these parsed regular expressions as either "explosive" or "non-explosive."

To classify the parsed regular expressions, the control unit of the computing device may generate a temporary DFA from each of the parsed regular expressions in accordance with conventional DFA construction techniques and merge each of these temporary DFAs with a test DFA, again in accordance with conventional merge techniques, to generate a merged DFA. By comparing the size, e.g., in terms of storage space consumed or number of nodes, of the merged DFA to the size of the temporary DFA added to the size of the test DFA, the control unit of the computing device may determine whether a given one of the parsed regular expressions will result in state replication or explosion upon merging this temporary DFA with other DFAs generated from other parsed regular expressions. If the control unit determines state replication will occur, the control unit classifies the parsed regular expression as "explosive." If not, the control unit classifies the parsed regular expression as "non-explosive."

The control unit of the computing device may next generate for each parsed regular expression classified as "non-explosive," which may be referred to as a non-explosive regular expression, generate a DFA from the non-explosive regular expression. This DFA may be referred to as a non-explosive DFA. For those parsed regular expressions characterized as explosive, which may be referred to as explosive regular expressions, the control unit may generate a DFA from the explosive regular expression. This DFA may be referred to as an explosive DFA. In some instances, the control unit may re-characterize the temporary DFA generated from the corresponding parsed regular expression as either an explosive DFA or non-explosive DFA depending on the determined classification rather than re-generate the DFA from the same one of the parsed regular expressions.

Also for the explosive regular expressions, the control unit of the computing device may extract a signature or pattern fingerprint from each of the explosive regular expressions. These signature fingerprints typically each comprises a fragment or sub-string of a corresponding one of the explosive regular expressions that uniquely identifies or "fingerprints" each of the explosive regular expressions. Also, the signature fingerprint generally comprises a pure string in the sense that the signature fingerprint includes little if any ambiguous characters that may result in state replication upon merger of a DFA generated from the fingerprint with other DFAs. Example ambiguous characters may include an "*" replication character, a "-" range character, or any other character that may represent two or more characters and thereby facilitate state replication.

After extracting these signature fingerprints, the control unit of the computing device may generate a fingerprint DFA or f-DFA from each of these extracted fingerprints. Considering that the fingerprint is extracted so as to avoid state replication, the resulting f-DFA typically comprises a non-explosive DFA similar to the above described non-explosive DFAs. The control unit next merges the non-explosive DFA with the f-DFA to generate the group DFA. Notably, one or more nodes of the group DFA may identify one of the explosive DFAs, which may each represent the above described explosive DFA. The computing device may automatically, e.g., without administrator input or interventions, or the administrator may manually install or otherwise load the group DFA and individual DFA onto the network device.

The administrator may, after loading or otherwise installing the group DFA and individual DFA, enable the network device to receive packets. The network device may receive a packet and perform application identification to determine a network application, e.g., an HTTP application, an FTP application, a VoIP application, and the like, to which the packet corresponds by traversing one or both of the group and individual DFAs. Particularly, the network device first traverses one or more of the plurality of nodes of the group DFA, where each of the nodes, except terminal nodes, provides a transition to reach another node predicated upon a condition. These nodes may be referred to as transition nodes.

To traverse the group DFA, the network device extracts a string from the payload of the packet and evaluates the first character of the string in light of the transition conditions. If the character satisfies the condition, the character is said to be "consumed" and the control unit of the network device traverses to the next node indicated by the transition and evaluates the next character of the string extracted from the packet payload. If the character does not satisfy the condition for a particular condition, the control unit evaluates the character in light of other conditions specified by the node. If the character fails to satisfy any conditions, the control unit may determine that the packet matches no application. However, upon reaching a terminal node, e.g., a node with no transitions that identifies either an application or the individual DFA, the control unit may determine a partial match if the terminal node identifies a corresponding individual DFA or a match if the terminal node identifies an application.

In instances where the terminal node indicates a partial match by identifying, not an application, but one of the individual DFAs, the control unit then traverses the identified individual DFA in the manner similar to that described above with respect to the group DFA. The individual DFA however includes only terminal nodes that specify matches, e.g., that indicate application, and therefore the control unit may not determine partial matches when traversing the individual DFA. Upon traversing the individual DFA, the control unit may therefore determine a match, e.g., an application to which the packet corresponds, or fail to identify an application.

In the event of a match, either with respect to the group DFA or the individual DFA, the control unit determines an application identifier identifying the matched application, which may validated with other information included within the packet, such as the port and protocol information. In the event no match occurs, the control unit may not associate the packet with an application identifier or may associate the packet with a general application identifier indicative of the failed match.

In any event, the network device may, by utilizing the group DFA and individual DFA, improve the efficiency with which application identification is performed. The above described reduction in memory consumption may be achieved through the explosive analysis or classification phase, whereby the computing device may determine, prior to merging DFAs generated from regular expressions, those regular expressions that will result in state replication or explosion. By separating these "explosive" regular expressions from the "non-explosive" regular expressions and merging only "non-explosive" DFAs to form the group DFA, the resulting group DFA may include considerably less states and thereby consume less memory than a comparable DFA formed by merging explosive with non-explosive DFAs.

Moreover, by extracting non-explosive fingerprints and merging the f-DFA formed from these non-explosive fingerprints with the non-explosive DFA to form the group DFA, the explosive regular expressions may be partially identified during traversal of the group DFA. Upon such a partial match, the control unit may then traverse the individual DFA generated from the explosive regular expression from which the fingerprint was extracted. In this respect, the group DFA avoids state replication or explosion but still provides an indication of a partial match to enable traversal of separate individual DFAs. This two-step form of application identification may therefore more efficiently match explosive regular expressions by avoiding state replication and requiring traversal of a dedicated individual DFA. Further, the application identification performed in accordance with the techniques may more efficiently match non-explosive regular expressions as well, considering that the group DFA contains significantly less states that may require traversal to reach an end or terminal node. In this respect, the techniques may improve the speed with which pattern matching occurs by reducing substantially the number of states traversed to identify a match.

In one embodiment, a method comprises storing, with a network device, first data that defines a group deterministic finite automata (DFA), wherein the group DFA is formed by a merger of: (i) an individual non-explosive DFA generated from a corresponding non-explosive regular expression, and (ii) a fingerprint DFA (f-DFA) generated from a corresponding signature fingerprint, wherein the non-explosive regular expression comprises a regular expression determined not to cause state explosion during the merge to form the group DFA, wherein the signature fingerprint comprises a segment of an explosive regular expression that uniquely identifies the explosive regular expression, and wherein the explosive regular expression comprises a regular expression determined to cause state explosion during the merge. The method further comprises storing, with the network device, second data that defines, for the explosive regular expression, an individual DFA separate from the group DFA, wherein the signature fingerprint uniquely identifies the explosive regular expression from which the individual DFA is generated and receiving, with a network device, a packet. The method also comprises traversing, with the network device prior to traversing the individual DFA, the group DFA in order to determine whether the packet includes the segment of the explosive regular expression defined by the signature fingerprint, and traversing, with the network device, the individual DFA associated with the signature fingerprint based on the determination that the packet includes the segment of the explosive regular expression to identify a network application to which the packet corresponds.

In another embodiment, a network device comprising a control unit that stores first data that defines a group deterministic finite automata (DFA), wherein the group DFA is formed by a merger of: (i) an individual non-explosive DFA generated from a corresponding non-explosive regular expression, and (ii) a fingerprint DFA (f-DFA) generated from a corresponding signature fingerprint, wherein the non-explosive regular expression comprises a regular expression determined not to cause state explosion during the merge to form the group DFA, wherein the signature fingerprint comprises a segment of an explosive regular expression that uniquely identifies the explosive regular expression, and wherein the explosive regular expression comprises a regular expression determined to cause state explosion during the merge and stores second data that defines, for the explosive regular expression, an individual DFA separate from the group DFA, wherein the signature fingerprint uniquely identifies the explosive regular expression from which the individual DFA is generated. The network device also comprises at least one interface card that receives a packet. The control unit further traverses, prior to traversing the individual DFA, the group DFA in order to determine whether the packet includes the segment of the explosive regular expression defined by the signature fingerprint, traverses the individual DFA associated with the signature fingerprint based on the determination that the packet includes the segment of the explosive regular expression to identify a network application to which the packet corresponds.

In another embodiment, a computer-readable medium comprising instructions for causing a programmable processor to store, with a network device, first data that defines a group deterministic finite automata (DFA), wherein the group DFA is formed by a merger of: (i) an individual non-explosive DFA generated from a corresponding non-explosive regular expression, and (ii) a fingerprint DFA (f-DFA) generated from a corresponding signature fingerprint, wherein the non-explosive regular expression comprises a regular expression determined not to cause state explosion during the merge to form the group DFA, wherein the signature fingerprint comprises a segment of an explosive regular expression that uniquely identifies the explosive regular expression, and wherein the explosive regular expression comprises a regular expression determined to cause state explosion during the merge. The instructions also cause the programmable processor to store, with the network device, second data that defines, for the explosive regular expression, an individual DFA separate from the group DFA, wherein the signature fingerprint uniquely identifies the explosive regular expression from which the individual DFA is generated and receive, with a network device, a packet. The instructions further cause the programmable processor to traverse, with the network device prior to traversing the individual DFA, the group DFA in order to determine whether the packet includes the segment of the explosive regular expression defined by the signature fingerprint, and traverse, with the network device, the individual DFA associated with the signature fingerprint based on the determination that the packet includes the segment of the explosive regular expression to identify a network application to which the packet corresponds.

In another embodiment, a method comprises storing, with a computing device, data defining a plurality of regular expressions, determining whether each of the plurality of regular expressions causes state explosion, and classifying, with the computing device, each of the plurality of regular expressions as non-explosive or explosive depending on the determination, wherein one of the plurality of regular expression is classified as non-explosive and another one of the plurality the plurality of regular expressions is classified as an explosive regular expression. The method further comprises, for each of the explosive regular expressions, extracting, with the computing device, a corresponding signature fingerprint from the explosive regular expressions, wherein the signature fingerprint comprises a segment of the corresponding one of the explosive regular expressions that uniquely identifies the corresponding one of the explosive regular expressions, generating, with the computing device, a non-explosive Deterministic Finite Automata (DFA) from each of the plurality of regular expressions classified as non-explosive, and generating, with the computing device, an individual DFA from each of the plurality of regular expressions classified as explosive. The method also comprises generating, with the computing device, a fingerprint DFA (f-DFA) from each of the signature fingerprints extracted from a corresponding one of the plurality of regular expressions classified as explosive and merging, with the computing device, the non-explosive DFA and the f-DFA to generate a group DFA, wherein the group DFA comprises at least one node that identifies the individual DFAs and thereby links the group DFA to the individual DFA.

In another embodiment, a computing device comprises a control unit that stores data defining a plurality of regular expressions. The control unit includes a classification module that determines whether each of the plurality of regular expressions causes state explosion and classifies each of the plurality of regular expressions as non-explosive or explosive depending on the determination, wherein one of the plurality of regular expression is classified as non-explosive and another one of the plurality the plurality of regular expressions is classified as an explosive regular expression and a fingerprint extraction module that, for each of the explosive regular expressions, extracts a corresponding signature fingerprint from the explosive regular expressions, wherein the signature fingerprint comprises a segment of the corresponding one of the explosive regular expressions that uniquely identifies the corresponding one of the explosive regular expressions. The control unit also includes a Deterministic Finite Automata (DFA) construction module that generates a non-explosive DFA from each of the plurality of regular expressions classified as non-explosive, an individual DFA from each of the plurality of regular expressions classified as explosive, and a fingerprint DFA (f-DFA) from each of the signature fingerprints extracted from a corresponding one of the plurality of regular expressions classified as explosive, and a DFA merge module that merges the non-explosive DFA and the f-DFA to generate a group DFA, wherein the group DFA comprises at least one node that identifies the individual DFAs and thereby links the group DFA to the individual DFA.

In another embodiment, a computer-readable medium comprising instructions for causing a programmable processor to store, with a computing device, data defining a plurality of regular expressions, determine whether each of the plurality of regular expressions causes state explosion, and classify, with the computing device, each of the plurality of regular expressions as non-explosive or explosive depending on the determination, wherein one of the plurality of regular expression is classified as non-explosive and another one of the plurality the plurality of regular expressions is classified as an explosive regular expression. The instructions also cause the programmable processor to, for each of the explosive regular expressions, extract, with the computing device, a corresponding signature fingerprint from the explosive regular expressions, wherein the signature fingerprint comprises a segment of the corresponding one of the explosive regular expressions that uniquely identifies the corresponding one of the explosive regular expressions, generate, with the computing device, a non-explosive Deterministic Finite Automata (DFA) from each of the plurality of regular expressions classified as non-explosive and generate, with the computing device, an individual DFA from each of the plurality of regular expressions classified as explosive. The instructions further cause the programmable processor to generate, with the computing device, a fingerprint DFA (f-DFA) from each of the signature fingerprints extracted from a corresponding one of the plurality of regular expressions classified as explosive and merge, with the computing device, the non-explosive DFA and the f-DFA to generate a group DFA, wherein the group DFA comprises at least one node that identifies the individual DFAs and thereby links the group DFA to the individual DFA.

In another embodiment, a method comprises storing, with a network device, first data that defines a group deterministic finite automata (DFA), wherein the group DFA is formed by a merger of: (i) an individual non-explosive DFA generated from a corresponding non-explosive regular expression, and (ii) a fingerprint DFA (f-DFA) generated from a corresponding signature fingerprint, wherein the non-explosive regular expression comprises a regular expression determined not to cause state explosion during the merge to form the group DFA, wherein the signature fingerprint comprises a segment of an explosive regular expression that uniquely identifies the explosive regular expression, and wherein the explosive regular expression comprises a regular expression determined to cause state explosion during the merge. The method also comprises storing, with the network device, second data that defines, for the explosive regular expression, an individual DFA separate from the group DFA, wherein the signature fingerprint uniquely identifies the explosive regular expression from which the individual DFA is generated, and receiving, with a network device, a packet. The method further comprises traversing, with the network device prior to traversing the individual DFA, the group DFA in order to determine whether the packet includes the segment of the explosive regular expression defined by the signature fingerprint, and traversing, with the network device, the individual DFA associated with the signature fingerprint based on the determination that the packet includes the segment of the explosive regular expression to identify a pattern identified the explosive regular expression.

The details of one or more embodiments of the invention are set forth in the accompanying drawings and the description below. Other features, objects, and advantages of the invention will be apparent from the description and drawings, and from the claims.

## BRIEF DESCRIPTION OF DRAWINGS

FIG. 1 is a block diagram illustrating an exemplary network system in which one or more network devices implement the techniques described herein in order to more efficiently identify applications to which packets correspond.

FIG. 2 is a block diagram illustrating an example embodiment of the router of FIG. 1 in implementing the techniques described herein to more efficiently identify an application to which a packet corresponds.

FIG. 3 is a block diagram illustrating the IDP device of FIG. 1 in more detail.

FIG. 4 is a flowchart illustrating exemplary operation of a network device in performing the techniques described herein.

FIG. 5 is a flowchart illustrating exemplary operation of the router of FIG. 2 in implementing the techniques to more efficiently identify applications to which packets correspond.

FIG. 6 is a flowchart illustrating exemplary operation of the IDP device of FIG. 3 in implementing the techniques to more efficiently identify applications to which packets correspond.

FIG. 7 is a block diagram illustrating a group DFA graph data structure generated in accordance with the techniques described in this disclosure.

FIG. 8 is a block diagram illustrating an exemplary embodiment of a computing device that implements the techniques described herein to generate a group DFA and an individual DFA.

FIG. 9 is a flowchart illustrating exemplary operation of a computing device in implementing the techniques described herein so as to generate a group DFA and an individual DFA.

FIG. 10 is a diagram illustrating an exemplary graph depicting explosion factors, beta ($\beta$), computed for regular expressions.

FIG. 11 is a diagram illustrating an exemplary graph depicting three levels of state explosion.

FIG. 12 is a diagram illustrating an exemplary graph depicting the improved matching that may occur when performing application identification in accordance with the techniques described herein.

## DETAILED DESCRIPTION

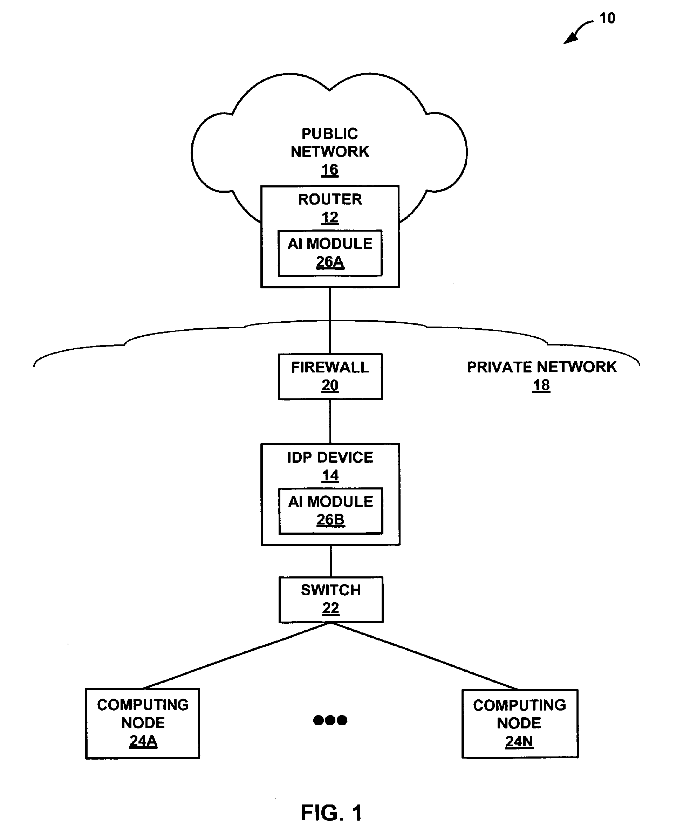

FIG. 1 is a block diagram illustrating an exemplary network system 10 in which one or more network devices implement the techniques described herein in order to more efficiently identify applications to which packets correspond. While described herein with respect to two exemplary network devices, a router 12 and an Intrusion Detection and Prevention (IDP) device 14 ("IPD device 14"), any network device may implement the improved application identification techniques described herein. Moreover, although described by way of example to devices that identify applications associated with network communications, the techniques are applicable to other systems that utilize regular expressions.

As shown in FIG. 1, network system 10 includes two networks, a public network 16 and a private network 18. Public network 16 may comprise any publicly accessible computer network, such as the Internet. Public network 16 may include a wide variety of interconnected computing devices or nodes, such as web servers, print servers, application servers, data servers, workstations, desktop computers, laptop computers, cellular or other mobile devices, Personal Digital Assistants (PDAs), and any other device cable of connecting to a computer network via a wireless and/or wired connection. Typically, these devices communicate with one another via a packet-based protocol, such as an Internet Protocol (IP) / Transmission Control Protocol (TCP). As a result, public network 16 may represent or be referred to as a "packet-based" computer network.

Public network 16 includes router 12, which represents an exemplary embodiment of a network device that implements the techniques described herein. Router 12 typically maintains routing information (not shown in FIG. 1) that identifies routes or paths through public network 16 by which to reach corresponding destinations. Router 12 may distill these paths into forwarding information (again, not shown in FIG. 1) that identifies a "next hop" for each of these routes. A next hop may identify an interface by which to forward a packet along a given path. Router 12 receives packets and accesses the forwarding information based on information (e.g., a header) included within the packet to determine a next hop for the route along which the packet is traveling. Router 12 then forwards the packet via the interface identified by the next hop. In this manner, router 12 may route packets received both from public network 16 and private network 18 to the packet's intended destination.

Private network 18 may represent a network that is owned, operated and maintained typically by a private entity, such as an enterprise or business, and which is not generally accessible by the public. Private network 18 includes a firewall 20, a switch 22, a plurality of computing nodes 24A-24N ("computing nodes 24") and IDP device 14. Firewall 20 may represent a network security device that protects private network 18 and, in particular, computing nodes 24. Firewall 20 usually protects these nodes 24 by performing gatekeeper services, such as a Network Address Translation (NAT). Usually, these gatekeeper services rely solely on network layer information, such as IP addresses and ports, parsed from a header of each packet.

In other words, firewall 20 may act as a gatekeeper to private network 18 by inspecting IP addresses and ports to ensure that traffic entering private network 18 only enters in response to a previously sent traffic from one or more of computing nodes 24. This, in effect, helps reduce unauthorized access to private network 18, much like a gatekeeper, thereby possibly preventing the public from accessing private network 18. Firewall 20 may also, by performing NAT, obscure an internal configuration of private network 18 to prevent malicious entities or "hackers" from utilizing known weaknesses in the internal configuration.

Switch 22 represents a network device capable of performing routing of traffic among various end-points, such as computing nodes 24. Switch 22 may therefore switch the flow of traffic to deliver particular packets to corresponding ones of computing nodes 24. While shown as a single switch 22, private network 18 in conjunction with or as an alternative to switch 22 may employ a hub, a router or other network device capable of performing switching and/or routing of data to and from nodes 24. Moreover, while shown as comprising a single firewall device 20 and a single switch 22 for ease of illustration purposes, private network 18 may include a plurality of firewalls similar to firewall 20 and a plurality of switches similar to switch 22. The techniques therefore should not be limited to the exemplary embodiment shown in FIG. 1.

IDP device 14 may comprise a network security device capable of detecting and possibly preventing network attacks. Typically, IDP device 14 applies one or more polices to detect one or more sets of network attacks. Each policy may define a set of attack patterns that correspond to the set of network attacks and which when applied to both incoming and outgoing traffic may enable IDP device 14 to detect each corresponding set of network attacks. Notably, these attack patterns are different from the patterns defined by the regular expressions. "Incoming network traffic," as used herein, may comprise both traffic leaving and entering private network 18 and thus refers to traffic incoming with respect to IDP device 14. Likewise, "outgoing traffic" may not refer to any particular direction but merely to traffic leaving IDP device 14 from the perspective of IDP device 14. Thus, incoming and outgoing may refer to the direction of traffic from the perspective of IDP device 14 and do not denote any particular direction or flow of traffic between public and private networks 16 and 18, respectively.

IDP device 14 may apply these policies by applying the attack patterns identified by these policies to network traffic flowing in both directions (i.e., inbound traffic received from public network 16 as well as outbound traffic destined to public network 16) to improve the accuracy in detecting network attacks. For example, IDP device 14 may apply these attack patterns to both Client-To-Server (CTS) and Server-To-Client (STC) communications between public network 16 and computing nodes 24. IDP device 14 may also analyze the network traffic to correlate traffic in one direction with traffic in the opposite direction for each communication session detected within the network traffic. For each client-server communication session, IDP device 14 may identify a packet flow in one direction (e.g., a CTS communication flow for a particular software application on the client) and a corresponding packet flow in the opposite direction (e.g., response STC communications flowing from the server to the client for that same software application).

IDP device 14 may identify the packet flows in the monitored traffic, and transparently reassembles application-layer communications from the packet flows. IDP device 14 may include a set of protocol-specific decoders to analyze the application-layer communications and identify application-layer transactions. In general, a "transaction" refers to a bounded series of related application-layer communications between peer devices. For example, a single TCP connection can be used to send (receive) multiple HyperText Transfer Protocol (HTTP) requests (responses). As one example, a single web-page comprising multiple images and links to HTML pages may be fetched using a single TCP connection. An HTTP decoder may be invoked by IDP device 14 to identify each request / response within the TCP connection as a different transaction. This may be useful to prevent certain attack definitions or attack patterns from being applied across transaction boundaries. In one embodiment, a transaction may be identified according to source and destination IP address, protocol, and source and destination port numbers, which may be generally referred to as a "five-tuple." Other embodiments may identify a transaction in other ways, for example, by using media access control ("MAC") addresses.

For each transaction, the corresponding decoder may analyze the application-layer communications and extract protocol-specific elements. As an example, for an FTP login transaction, the FTP decoder may extract data corresponding to a user name, a name for the target device, a name for the client device and other information. In addition, the decoders may analyze the application-layer communications associated with each transaction to determine whether the communications contain any protocol-specific "anomalies." In general, a protocol anomaly refers to any detected irregularity within an application-layer communication that does not comply with generally accepted rules of communication for a particular protocol. The rules may, for example, be defined by published standards as well as vendor-defined specifications. Other anomalies refer to protocol events (i.e., actions) that technically comply with protocol rules but that may warrant a heightened level of scrutiny.

One example of such a protocol event is repeated failure of a File Transfer Protocol (FTP) login request. Example anomalies for the HTTP protocol include missing HTTP version information, malformed universal resource locators ("URLs"), directory traversals, header overflow, authentication overflow and cookie overflow. Example anomalies for a Simple Mail Transfer Protocol (SMTP) include too many recipients, relay attempts, and domain names that exceed a defined length. Example anomalies for a Post Office Protocol version 3 (POP3) include user overflow and failed logins. Additional anomalies for FTP include missing arguments, usernames or pathnames that exceed a defined length and failed logins. Other anomalies include abnormal and out-of-specification data transmissions, and commands directing devices to open network connections to devices other than the client devices issuing the commands.

IDP device 14 may apply the attack patterns identified by the policy to the extracted elements and the protocol-specific anomalies identified by the protocol decoders to detect and prevent network attacks. These attack patterns, when applied to incoming and outgoing traffic, may therefore identify one or more attack signatures, protocol anomalies and other malicious behavior based on application layer data and other stateful protocol information. Moreover, IDP device 14 may associate particular patterns with protocols that correspond to particular applications. For a given communication session intercepted by IDP device 14, IDP device 14 may attempt to identify the application type and underlying protocol for the packet flows of the session in order to select one or more patterns to apply to the packet flows. In the event IDP device 14 detects a network attack, IDP device 14 may take one or more programmed actions, such as automatically dropping packet flows associated with the application-layer communications within which the network attack was detected to prevent the attack, thereby preserving network security.

To identify the application type, e.g., identify to which application each packet corresponds, IDP device 14 includes an Application Identification (AI) module 26A ("AI module 26A"). AI module 26A represents a hardware and/or software module that implements application identification algorithms to identify a type of application to which each packet, or packet flow, corresponds. While not shown in FIG. 1, AI module 26A may store data defining a plurality of Deterministic Finite Automata (DFA). DFAs, as described below in more detail, may comprise a graph data structure (or "graph," for short) having a plurality of interconnected nodes. Each node, except for possibly terminal nodes, of the graph defines a state, as well as, a condition by which to traverse to other nodes of the graph, and may therefore be referred to as "transition nodes." Terminal nodes, e.g., nodes of the graph that defines states but no condition, may store data identifying the application. In other words, AI module 26A may traverse the nodes of one or more of the DFA graphs until reaching a terminal node associated with a particular application. Upon reaching this terminal node, AI module 26A may associate the packet or packet flow with the network application identified by the terminal node. In this manner, AI module 26A may identify network applications and thereby enable IDP device 14 to select a subset of the set of attack patterns to apply to packet flows.

Router 12 also includes an AI module 26B that performs substantially similar operations in order to identify a network application to which a packet or packet flow corresponds. That is, AI module 26B may be substantially similar to AI module 26A. In this respect, AI module 26B may also include a similar plurality of DFA, where each of these DFAs comprises a graph data structure having a plurality of interconnected nodes. At least some of the nodes are terminal nodes that are associated with a network application. Again, AI module 26B may traverse these DFA graphs, and upon reaching one of these terminal node, associate the packet or packet flow with the network applications identified by the terminal node.

However, rather than utilize the identified application for pattern selection purposes similar to IDP device 14, router 12 may utilize the identified application, as one example, to select a particular one of a plurality of Quality of Service (QoS) classes. In other words, router 12 upon identifying an application to which a packet or, more specifically, a packet flow corresponds, may select one of the plurality of QoS classes based on the identified application.

For example, AI module 26B may identify a packet from a packet flow as corresponding to a Voice over Internet Protocol (VoIP) network application. Router 12 may then access data defining QoS profiles, where each QoS profile specifies one of the plurality of QoS classes for a different application. Router 12 may utilize the identified application, e.g., VoIP, as a lookup to select the corresponding QoS profile defined for the VoIP application. Router 12 may determine based on this QoS profile the one of the plurality of QoS classes associated with the VoIP application. Router 12 may then associate the determined QoS class with the packet flow and forward packets of this packet flow in accordance with the determined QoS class. In this respect, application identification, as implemented by AI modules 26A, 24B ("AI modules 26") may facilitate not only pattern selection in the IDP context, but also forwarding within the routing context to ensure a given level or class of QoS.

In accordance with the principles of the invention as set forth in this disclosure, both router 12 and IDP device 14 may implement the techniques described herein to more efficiently implement application identification. In particular, AI modules 26 may each implement these techniques described herein to reduce the amount of memory required to store the plurality of DFAs while also improving the speed with which AI modules 26 may traverse the plurality of DFAs. The described techniques impact not only network devices, such as router 12 and IDP device 14, but also, as described in more detail below, computing devices responsible for generating the DFAs used in performing application identification. While described herein with respect to a particular aspect, e.g., application identification, the techniques may apply generally to any aspect whereby DFAs are used in identifying particular strings or character patterns within a set amount of data.

Initially, router 12 and IDP device 14 may receive data defining a group DFA and one or more individual DFAs. Often, this data comprises a regular or periodic, e.g., daily, weekly, or monthly, update package in which the group DFA and one or more individual DFAs are compressed to facilitate transmission to router 12 and IDP device 14 via a network connection. Alternatively, an administrator or other network user may manually, either locally or remotely, load the data defining the group DFA and one or more individual DFAs into respective router 12 and IDP device 14. Regardless, each of router 12 and IDP device 14 may store first data that defines a group DFA and second data that defines an individual DFA separate from the group DFA.

The group DFA represents a merged DFA formed by merging at least one individual DFA classified as "non-explosive" with at least one "fingerprint" DFA or f-DFA. In this respect, the merged DFA may be referred to as the group DFA in that the group DFA is formed from a "group" of individual non-explosive DFAs and f-DFAs. Commonly, a DFA is used to implement a regular expression (which is often referred to as a "regex" for short) and a number of algorithms have been developed by which to automatically convert a regular expression into a DFA.

A regular expression may comprise a string of characters that identify patterns or text of interest. With respect to application identification, a regular expression may identify patterns indicative or associated with a particular application. Network administrators or other users may specify regular expressions using a formal or standardized language, such as Perl, a Tool Command Language (TCL), a Portable Operating System Interface (POSIX), and the like, so as to identify text particular to certain applications. Regular expressions are widely used as a result of the programmable nature and corresponding flexibility, which enable regular expressions to be quickly programmed to identify emerging applications.

Typically, these formal languages define special characters to increase the character pattern or string matching capabilities. For example, one formal language uses the "*" character to denote that zero or more of the character proceeding the asterisk "*" special character may be present in a matching string. To illustrate, the regular expression "ab*c" within this formal language may match strings of "ac," "abc", "abbc," and so on. In the illustration, any string with an "a" character followed by zero or more "b" characters and terminated with a "c" character may match the regular expression.

The resulting DFA generated from a regular expression may comprise a graph having a plurality of nodes. Typically, there is at least one node for each character in the regex, and the transitions between the nodes are conditioned upon encountering the next character of the regex. For example, a simple regex of "abc" may result in a DFA with three nodes, one for the character "a," another for the character "b" and another for the character "c." The DFA may also include an initial start or zero node. The zero node may define a transition to the first "a" node with the condition that a character of the input string match character "a" of the regex. The first node may also define a transition with a condition that, to traverse to the second node, a next character of the input string matches character "b" of the regex. The first node may also define another transition with a condition that, to traverse to the zero node, the next character of the input string matches any character but "b" of the regex. The second node may define two conditions as well, one for transitioning to the third node upon a condition that the next character of the input string matches character "c' of the regex and another for transitioning back to the zero node upon the condition that the next character of the input string matches any character but the "c" character of the regex. The third node may comprise a terminal node and define no transitions but instead indicate a matching state.

Usually, the process of converting of regular expression into a DFA involves a first step whereby a computing device converts the regular expression into a Non-deterministic Finite Automata (NFA). An NFA is much like a DFA in that an NFA comprises a graph data structure having a plurality of interconnected nodes. However, unlike the DFA, the NFA may enable transition between nodes having no associated condition, which are referred to as "epsilon transitions" and denoted commonly as "ε-transitions." In other words, one or more nodes of an NFA may define a state and one or more conditions by which to traverse to other nodes, much like the DFA, but also include nodes that define a state and one or more condition-free ε-transitions, These ε-transitions are, therefore, non-deterministic in that these transitions are not associated with a condition and provide the basis for the name "non-deterministic" finite automata. A graph representing a DFA, contrary to the NFA, only includes intermediate nodes defining a state and conditions by which to traverse to other nodes and terminal nodes defining a state but not conditions. The graph representing the DFA, in other words, does not include traversal nodes that define a state and any ε-transitions. In this sense, the DFA may be considered "deterministic" as every transition between nodes is associated with a condition.

Conversion of the regular expression into the NFA may proceed according to a number of algorithms. Exemplary algorithms for converting the regex into the NFA may include an algorithm referred to as a "Thompson" algorithm and an algorithm referred to as a "Glushkov" algorithm. The NFA resulting from conversion according to one of these two exemplary algorithms may be characterized as a "Thompson construction" or a "Glushkov construction," respectively. Typically, the resulting data, e.g., graph data structure, defining the NFA consumes an amount of memory linear to the length of the regex used to generate the NFA. Under either the Thompson or Glushkov algorithms, conversion time is also linear to the length of the regex implemented by the NFA. While NFAs may consume little memory and take only linear time to generate when compared to DFAs, NFAs typically identify the regex or match the regex less efficiently than DFAs can match the same regex due to the ambiguous NFA ε-transitions. As matching speeds are typically more problematic in terms of limiting bandwidth, network administrators favor Al modules that provide high matching speeds or match more efficiently rather than Al modules that consume fewer system resources, such as memory space. As a result, most Al modules, including Al modules 26 implement application identification using DFA rather than NFAs.

To generate the DFA from the NFA, the NFA is converted using another algorithm referred to as a "subset" algorithm into the DFA. The resulting DFA may be characterized in this instance as a DFA formed using the "subset construction." The resulting DFA may then undergo minimization according to a conventional algorithm referred to as a "Hopcroft" algorithm. Generation of the DFA according to the above process may take an amount of time exponential to the length of the regex implemented by the resulting DFA. Moreover, the resulting DFA may consume an amount of memory that is an exponential factor of the length of the regex implemented by the resulting DFA. From a system resource perspective, therefore, the DFA is less efficient than the NFA. Yet, the DFA, due to its deterministic nature, may identify or match the regex at speeds linear to the size of the input stream (e.g., the size of the packet or portion of the packet provided for use in application identification), which is typically much more efficient than using a NFA to match the same regex.

As mentioned above, the group DFA represents a merged DFA formed by merging at least one individual DFA considered to "non-explosive" with at least one "fingerprint" DFA or f-DFA. Explosive and non-explosive DFAs refer to DFA generated from explosive or non-explosive regular expressions, respectively. Whether a regular expression is explosive or not may be determined through analysis of the regular expression. In some instances, this analysis may involve generating a temporary DFA from a given regex and merging this temporary DFA with a test DFA generated from a corresponding test regular expression. The number of nodes or states of the graph defining the merged DFA may then be compared to the total of the number of nodes or states of the temporary DFA added to the number of nodes or states of the test DFA.

Based on the comparison, each regular expression may be classified as "explosive" or "non-explosive." Explosive regular expressions represent those regular expressions that result in a merged DFA graph with less nodes than or nodes equal to the total of the addition of nodes of the temporary and test DFAs, while non-explosive regular expression represent those regular expressions that result in a merged DFA graph with more nodes than the total of the addition of nodes of the temporary and test DFAs. In other words, a "non-explosive" regular expression comprises a regular expression determined not to cause state explosion during the merge operation to form the group DFA and an "explosive" regular expression comprises a regular expression determined to cause state explosion during the merge operation to form the group DFA. Non-explosive regular expressions are then converted into corresponding DFAs, which are referred to herein as non-explosive DFAs. These non-explosive DFAs may then be merged with other non-explosive DFAs, as well as, the at least one f-DFA.

The f-DFA refers to a DFA generated from a signature fingerprint of a regular expression identified as an explosive regular expression. The signature fingerprint refers to a portion of an explosive regular expression that uniquely identifies, like a fingerprint, the corresponding explosive regular expression from which the signature fingerprint is extracted. Typically, the signature fingerprint represents a contiguous string of characters extracted from the larger string defining the regular expression. In this respect, the signature fingerprint may represent a sub-string of the string defined by the regular expression or a segment of an explosive regular expression that uniquely identifies the explosive regular expression. Signature fingerprint extraction is discussed in more detail below. Briefly, the goal of fingerprint extraction is to reduce ambiguity inherent in explosive regular expressions and thereby extract a signature fingerprint that does not result in state explosion. By extracting fingerprints in this manner, the f-DFA generated from the extracted fingerprint is also non-explosive.

After extracting the signature fingerprint, a DFA, referred to as a fingerprint DFA or f-DFA, may be generated from the signature fingerprint in the same manner discussed above and merged with the above discussed non-explosive DFA to generate the group DFA. The group DFA therefore may represent a DFA formed by merging a plurality of non-explosive DFA, where at least one of the non-explosive DFA comprises an f-DFA generated from a signature fingerprint extracted from an explosive regular expression. DFAs may be merged in a manner similar to the subset algorithm discussed above with respect to converting NFAs to DFAs.

While merging the plurality of non-explosive DFA including the at least one f-DFA, individual DFA separate from the group DFA may be generated in the above described manner for each non-explosive regular expression. Individual DFAs may therefore be characterized as "explosive" DFAs, however this may constitute a misnomer, as individual DFAs are not merged with any other DFAs, either explosive or non-explosive, and cannot therefore cause state explosion. For this reason, these DFAs are referred to as "individual" DFAs in that these DFAs are each separate from the group DFA. Each of these individual DFAs may be associated with the explosive regular expression and also the extracted signature fingerprint. In this manner, each of AI modules 26 of router 12 and IDP device 14 may receive and store first and second data that defines the group DFA and one or more individual DFAs.

Either one or both of router 12 and IDP device 14 may then, after receiving and storing the data defining the group and one or more individual DFAs, receive a packet of a packet flow. Either one or both of router 12 and IDP device 14 may first determine whether the packet corresponds to a packet flow that router 12 and/or IDP device 14 have already identified as corresponding to a particular network application. Upon determining that an application has been previously identified for these packets, network device 12 and/or 14 may not forward the packet to respective AI modules 26 for application identification. Often, these network devices 12, 14 maintain flow tables that stores current or active packet flows and corresponding information, such as an associated QoS class in the case of router 12 or pattern profile in the case of IDP device 14. If, however, these network devices 12, 14 do not maintain an entry in the flow table for the identified packet flow to which the received packet corresponds, AI modules 26 may perform application identification to determine an application to which the packet of the packet flow corresponds.

To perform application identification, AI modules 26 may traverse one or more of the plurality of nodes (or states) of the group DFA prior to traversing any one of the one or more individual DFAs. AI modules 26 may traverse this group DGA in order to determine whether the packet includes the segment of the explosive regular expression defined by the signature fingerprint. In other words, one or more of the nodes of the group DFA graph data structure comprise a terminal node indicating the packet includes the segment defined by the fingerprint signature. This terminal or leaf node may be linked or associated with one of the individual DFA. AI modules 26 may traverse this graph to determine whether any portion or a set portion, such as a header, of the packet matches the segment defined by the fingerprint signature and, if so, encounter one of these fingerprint terminal nodes.

Upon encountering one of these fingerprint terminal nodes, AI modules 26 may then traverse, in order to identify a network application to which the packet corresponds, one or more of the plurality of nodes (or states) of the individual DFA identified by the fingerprint terminal node. In other words, AI modules 26 may traverse one or more of the plurality of nodes (or states) of the individual DFA associated with the signature fingerprint based on the determination that the packet includes the segment of the explosive regular expression. AI modules 26 may traverse this individual DFA until encountering a terminal node of the plurality of nodes of the graph defining the individual DFA and associate the packet with the network application identified by the terminal node. If AI modules 26 fail to reach a terminal node while traversing the individual DFA, AI modules 26 may return back to traversing the group DFA or may simply return the packet without identifying the network application.

AI modules 26 may not always perform this form of two-stage form of application identification involving traversal of first the group DFA and then an individual DFA identified through traversal of the group DFA. Instead, one or more nodes of the group DFA may comprise terminal nodes that identify applications rather than identify fingerprints associated with a corresponding individual DFA. AI modules 26, upon reaching these terminal nodes of the group DFA graph data structure, may associate the packet with the network application identified by the terminal node.

The techniques may provide one or more benefits, particularly with respect to memory consumption and matching speeds. By separating so-called "explosive" regular expressions from "non-explosive" regular expression, the techniques may ensure only non-explosive regular expressions are merged to form the group DFA and thereby avoid state explosion. By avoiding state explosion, the number of states or nodes of the graph may be substantially reduced, thereby reducing the amount of memory required to store the group DFA graph data structure. This may be particularly beneficial in systems that have set memory page sizes in that matching speeds or traversal of the DFA may proceed more efficiently when the amount of memory to store a DFA does not exceed the size designated for a memory page.

As an example, a DFA graph data structure that requires two memory pages requires AI modules 26 to swap memory pages when traversing the DFA. As these swaps may require substantial amounts of time to perform relative to traversing the DFA for pattern matching purposes, the swap time may constitute a significant amount of overhead that detracts from the efficiency with which pattern matching may occur using the DFA. Often, to overcome this memory page limitation, the DFA may be split into one or more DFAs that can be executed in parallel to perform pattern matching. Yet, this does not reduce memory consumption. By avoiding state explosion, the group DFA described herein may not only avoid splitting the DFA into multiple DFAs and the ensuing parallel matching that consumes significant processor or computational resources, but also reduces substantially the amount of memory consumed to store the group DFA data structure. In other words, the above described group DFA may, in some instances, consume less than or equal to a standard memory page.

State explosion can be avoided, as described above, by extracting signature fingerprints from explosive regexs and merging the resulting f-DFA with the non-explosive DFA to form the group DFA. In this manner, the group DFA still identifies explosive regexs by way of the f-DFA but does not incorporate any DFA that cause state explosion. Through these f-DFAs, AI modules 26 may still partially identify explosive regexs within the group DFA but then traverse separate individual DFA in a second stage to confirm the application match. In other words, the f-DFAs serve as "hints" to AI modules 26 when traversing the group DFA. Upon matching one of these "hints," AI modules 26 may access a separate individual DFA based on the hint and traverse this individual DFA to confirm the application suggested by the hint. This separation of the non-explosive group DFA from the explosive individual DFAs not only limits consumption of memory resources but further facilitate matching as explosive regexs, which are often time consuming to match, are only matched if a hint or f-DFA suggests that this regex may be present within the packet. This may improve matching speed and facilitate overall application identification.

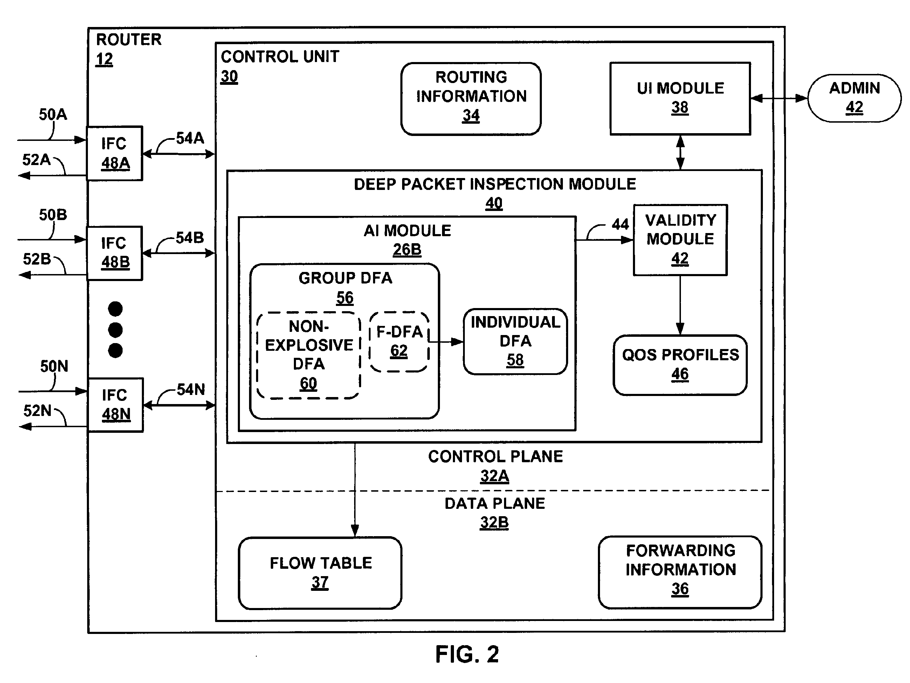

FIG. 2 is a block diagram illustrating an example embodiment of router 12 of FIG. 1 in implementing the techniques described herein to more efficiently identify a software application to which a packet of a network communication corresponds. While described with respect to a particular network device, e.g., a router, the techniques may be implemented by any network device including a bridge, a switch, a hub, a Wide Area Network (WAN) acceleration device, or any other network device that performs application identification. Moreover, the techniques may be applied to other network devices or systems that apply regular expressions for purposes of pattern matching other than to identify applications. The techniques should therefore not be limited to the exemplary embodiment described herein.

As shown in FIG. 2, router 12 includes a control unit 30. Control unit 30 may comprise one or more processors (not shown in FIG. 2) that execute software instructions, such as those used to define a software or computer program, stored to a computer-readable storage medium (again, not shown in FIG. 2), such as a storage device (e.g., a disk drive, or an optical drive), or memory (such as Flash memory, random access memory or RAM) or any other type of volatile or non-volatile memory, that stores instructions to cause a programmable processor to perform the techniques described herein. Alternatively, control unit 30 may comprise dedicated hardware, such as one or more integrated circuits, one or more Application Specific Integrated Circuits (ASICs), one or more Application Specific Special Processors (ASSPs), one or more Field Programmable Gate Arrays (FPGAs), or any combination of one or more of the foregoing examples of dedicated hardware, for performing the techniques described herein.

Control unit 30 may be divided into two logical or physical "planes" to include a first control or routing plane 32A and a second data or forwarding plane 32B. That is, control unit 30 may implement two separate functionalities, e.g., the routing and forwarding functionalities, either logically, e.g., as separate software instances executing on the same set of hardware components, or physically, e.g., as separate physical dedicated hardware components that either statically implement the functionality in hardware or dynamically execute software or a computer program to implement the functionality.

Control plane 32A of control unit 30 may execute the routing functionality of router 28. In this respect, control plane 32A may represent hardware and/or software of control unit 30 that implements routing protocols (not shown in FIG. 2) by which routing information 34 may be determined. Routing information 34 may include information defining a topology of a network, such as public network 16. Control plane 32A may resolve the topology defined by routing information 34 to select or determine one or more routes through public network 16. Control plane 32A may then update data plane 32B with these routes, where data plane 32B maintains these routes as forwarding information 36. Forwarding or data plane 32B may represent hardware and/or software of control unit 30 that forwards network traffic in accordance with forwarding information 36.

Control plane 32A may further comprise a user interface module 38 and a deep packet inspection module 40. User interface module 38 ("UI module 38") may represent a hardware and/or software module by which an administrator 42 ("admin 42") or some other user may interact with control unit 30. In particular, UI module 38 may present one or more user interfaces by which admin 42 may interact with deep packet inspection module 40. UI module 38 may, in some embodiments, enable script-based configuration by way of the text-based user interface, such as a command line interface (CLI). While describe herein with respect to a user or admin 42 interacting with UI module 38, another computing device, such as a provisioning system, a server, or any other networked computing device, may remotely interact with UI module 38. In this respect, UI module 38 presents an interface by which admin 42 or a computing device may locally and/or remotely interact with UI module 38.

Deep packet inspection module 40 represents a hardware and/or software module that performs deep packet inspection of application-layer data to determine a software application (e.g., a particular layer seven network application or network protocol) to which a packet flow corresponds. Deep packet inspection may refer to an inspection of a header and payload of the packet and therefore represents a "deeper" inspection than a cursory inspection of a single header of the packet. For example, the cursory inspection usually involves parsing an IP header from an IP packet to extract a "five-tuple." This "five-tuple" may comprise a source address, a source port, a destination address, a destination port, and a protocol. This five-tuple generally identifies a packet flow to which the packet corresponds.

Often, data plane 32B performs this cursory inspection and stores the packet flows in flow table 37. Flow table 37 may comprise data defining a table data structure having a plurality of entries, where each of the entries identify, typically by way of the five-tuple, an active or current packet flow, as well as, additional information pertinent to forwarding packets of the packet flow, such as a QoS class. Data plane 32B may forward packets up to deep packet inspection module 40 of control plane 32A upon determining that a packet flow represents a new packet flow. Deep packet inspection module 40 may identify the application to which the packet of the new packet flow corresponds and a corresponding QoS class for the identified application. Deep packet inspection module 40 may then pass the packet as well as the QoS class back to data plane 32B, which updated flow table 37 to include a new entry for the new packet flow and corresponding QoS class. Data plane 32B may then forward the new packet in accordance with the corresponding QoS class.

In order to determine the network application to which the packet of the new packet flow corresponds, deep packet inspection module 40 may include the above described AI module 26B. Deep packet inspection module 40 may also include validity module 42 that validates an application identifier 44 output by AI module 26B. In other words, validity module 42 may verify that the application identified by AI module 26B, e.g., application identifier 44, corresponds to other information included within the packet, such as the five-tuple. Validity module 42 may therefore represent a hardware and/or software module that verifies the identified application to ensure accuracy with other information included within the packet. Deep packet inspection module 40 also stores data defining QoS profiles 46, which as described above may be indexed by application or, more specifically, application identifier. Each of QoS profiles 46 may associate an application or application identifier with a particular one of a plurality of QoS classes.

As further shown in FIG. 2, router 12 includes Interface Cards (IFCs) 48A-48N ("IFCs 48") that receive and send packet flows or network traffic via inbound network links 50A-50N ("inbound network links 50") and outbound network links 52A-52N ("outbound network links 52"), respectively. IFCs 48 are typically coupled to network links 50, 52 via a number of interface ports (not shown), and forward and receive packets and control information from control unit 30 via a respective one of paths 54A-54N ("paths 54"). Router 12 may include a chassis (not shown in FIG. 2) having a number of slots for receiving a set of cards, including IFCs 48. Each card may be inserted into a corresponding slot of a chassis for communicably coupling the card to a control unit 30 via a bus, backplane, or other electrical communication mechanism.

Initially, admin 42 either locally or remotely via a remote computing device, such as a provisioning system, interacts with a user interface presented by UI module 38 to input or upload a group DFA 56 and an individual DFA 58. Notably, admin 42 may upload an install package or other compressed file to control unit 30 via a user interface presented by UI module 38. Control unit 30 may then uncompress and extract group DFA 56 and individual DFA 58 and automatically install group DFA 56 and individual DFA 58 within AI module 26B.

As discussed above, group DFA 56 comprises a DFA resulting from the merger of two types of DFAs, at least one non-explosive DFA and at least one f-DFA. FIG. 2 illustrates this composition of group DFA 56 by way of two dashed boxes labeled "non-explosive DFA 60" and "f-DFA 62." The boxes are dashed so as to identify that these DFAs 60, 62 are merged within one another to form group DFA 56. Notably, individual DFA 58 is separate and distinct from group DFA 56 and f-DFA 62 links group DFA 56 to individual DFA 58. In this respect, group DFA 56 may be associated with individual DFA 58 to form the two-stage application identification discussed above. While shown in FIG. 2 as comprising a single non-explosive DFA 60 and a single f-DFA 62, group DFA 56 may comprise a plurality of non-explosive DFAs 60 and a plurality of f-DFAs 62. Considering that group DFA 56 may comprise a plurality of f-DFAs 62, AI module 26B may, despite the single individual DFA 58 illustrated in FIG. 2, store a plurality of individual DFAs 58 with each one of the plurality of f-DFAs 62 linking group DFA 56 to a corresponding one of the plurality of individual DFAs 58.

After installing group DFA 56 and individual DFA 58 within AI module 26, admin 42 may enable or otherwise activate router 12 to begin receiving packets. Alternatively, admin 42 may install group DFA 56 and individual DFA 58 while router 12 continues to receive and forward packets and admin 42 may enable deep packet inspection module 40 upon completing the install. Regardless, data plane 32B may receive packets on one or more of paths 54 from corresponding one or more of IFCs 48 via inbound network links 50. Data plane 32B may perform the above described cursory inspection of each received packet to extract the above described five-tuple from each packet. Data plane 32B then access flow table 37 to determine whether any one of the plurality of entries defined by flow table 37 corresponds to the extracted five-tuple for each packet. If an entry matches the extracted five-tuple, data plane 32B determines the QoS class defined by the matching or corresponding entry and forwards the packet in accordance with the determined QoS class.

Data plane 32B may forward the packet in accordance with the determined QoS class by queuing the packet to a particular one of a plurality of forwarding queues (not shown in FIG. 2) based on the determined QoS class or performing some other forwarding procedure to ensure this QoS class is met. Data plane 32B may then service these forwarding queues and upon popping or retrieving the packet from this forwarding queue perform a lookup in forwarding table 36 to determine to which of IFCs 48 to forward the packet. Data plane 32B may utilize the destination address defined within a header of the packet as a key into forwarding table 36. Data plane 32B may then forward the packet to the determined one of IFCs 48, which forwards the packet via the corresponding one of outbound links 52.

However, upon determining that no entry in flow table 37 matches or corresponds to the five-tuple extracted from the incoming packet, data plane 32B may determine that the packet corresponds to a new packet flow. As no entry exists and therefore no QoS class is associated with the packet flow, data plane 32B forwards the packet to deep packet inspection module 40 in order to identify an application and corresponding QoS class associated with the packet flow identified by the extracted five-tuple. Deep packet inspection module 40 may receive the packet and AI module 26B of deep packet inspection module 40 performs application identification in accordance with the techniques described herein to more efficiently identify the application to which the packet corresponds.

AI module 26B first traverses group DFA 56 with the packet comprising an input stream. AI module 26B may set a first marker, cursor, or pointer construct identifying a starting position within data defining the packet and a second marker, cursor or pointer construct identifying an ending position within data defining the packet. Typically, AI module 26B sets each of these cursors or pointer constructs to point to a character within the payload, not the header, of the packet, which therefore constitutes "deep" packet inspection rather than cursory packet inspection. AI module 26B may also set a third marker, cursor or pointer construct identifying a current location within the input stream defined by the first and second markers.

AI module 26B may, based on the character identified by the first marker, traverse the various nodes of the graph data structure represented by group DFA 56. Traversing between nodes consumes a character of the input stream defined by the first and second markers and AI module 26B may increment, after each traversal from one node to another, the third current marker or pointer construct, thereby retrieving the next character of the input stream identified by the first and second markers. AI module 26B continues in this manner until either AI module 26B increments the current marker to the second, end marker without reaching a terminal node or reaches a terminal node of the graph data structure represented by group DFA 56.

In the first instance where the current marker reaches the second, end marker but no terminal node is reached, AI module 26B may fail to identify an application to which the packet corresponds and instead output a general application identifier 44. Validity module 42 may verify this general application identifier 44 and select one of QoS profiles 46 associated with general application identifier 44. Typically, this one of QoS profiles 46 associates the general application with a "best effort" QoS class, which indicates that data plane 32B should apply its best effort when forwarding packets from the packet flow. AI module 26B may forward this packet, general application identifier 44 and the associated best effort QoS class to data plane 32B, which updates flow table 37 to include an entry for the packet flow to which the packet corresponds defining this information. Data plane 32B may then forward this packet in the manner described above.

Commonly, AI module 26B may fail to identify a particular application in these instances due to a lack of information included within the packet. Data plane 32B may therefore continue to forward packets received for this unidentified packet flow to deep packet inspection module 40 until AI module 26B of deep packet inspection module 40 successfully identifies the application associated with this unidentified packet flow. In some instances, data plane 32B may only forward a set number of packets, such as the first 5, 10 or 100 packets, to deep packet inspection module 40 so as to limit costly inspection and improve forwarding of this packet flow. While not shown in FIG. 2, deep packet inspection module 40 may maintain, for these unidentified packet flows, detailed application information extracted from a plurality of packets of the flow. In this respect, AI module 26B may identify an application based on a plurality of packets rather than on a single packet and the techniques should not be limited to a single packet input stream.

In the latter instance, however, where AI module 26B reaches a terminal node during the traversal of group DFA 26B, AI module 26B may either identify the application to which the packet corresponds or traverse individual DFA 58 depending on the state defined by the terminal node. That is, the terminal node may comprise a node of merged non-explosive DFA 60, which may identify an application to which the packet corresponds or represent a match of the non-explosive regex from which non-explosive DFA 60 was generated. Alternatively, the terminal node may comprise a node of merged f-DFA 62, which may include a pointer or other reference to corresponding individual DFA 58 or represent a match of the signature fingerprint from which f-DFA 62 was generated.

In the first instance, AI module 26B may output a particular application identifier 44, which validity module 42 may verify by noting, for example, whether the packet includes any other information, such as a port number, that verifies the determined application identified by application identifier 44. Assuming application identifier 44 is valid, validity module 42 or determines one of QoS profiles 46 associated with valid application identifier 44. Deep packet inspection module 40 may then forward the packet, application identifier 44 and the QoS class specified by the determined one of QoS profiles 46 to data plane 32B, which updates flow table 37 and forwards the packet in accordance with the specified QoS class in the manner described above.

In the second instance where AI module 26B reaches a terminal node linking group DFA 56 to individual DFA 58, AI module 26B traverses individual DFA 58 in a manner substantially similar to that described above with respect to the traversal of group DFA 56. AI module 26B may reset the third current marker to reset the input stream and then iterate through the input stream using the current marker until either reaching a terminal node or incrementing the current marker past the second, end marker without reaching a terminal node.

As described above, upon reaching the terminal marker, AI module 26B may output a particular application identifier 44, which validity module 42 validates and, assuming identifier 44 is valid, utilizes to access a corresponding one of QoS profiles 46. Also as described above, upon failing to reach a terminal node, AI module 26B may output a general application identifier 44, which validity module 42 always validates and uses to access a general one of QoS profiles 46 typically specifying a best effort QoS class. In either instance, deep packet inspection module 40 forwards the packet, application identifier 44 and the determine QoS class to data plane 32B, which updates flow table 37 and forwards the packet in accordance with the determine QoS class, as described above.

In this manner, a network device, such as router 12, may implement the techniques to more efficiently identify application to which a packet of a new packet flow corresponds. Based on this identified application, router 12 may determine a QoS class by which to forward packets associated with the new packet flow and thereby provide differentiated, per flow forwarding of packets. As the techniques may enable more efficient application identification, which comprises an aspect of forwarding, router 12 may not only more efficiently identify applications but, as a result of more efficient application identification, more efficiently forward packets received for new packet flows. Accordingly, the techniques may improve packet throughput with respect to packets identified as corresponding to new packet flows.

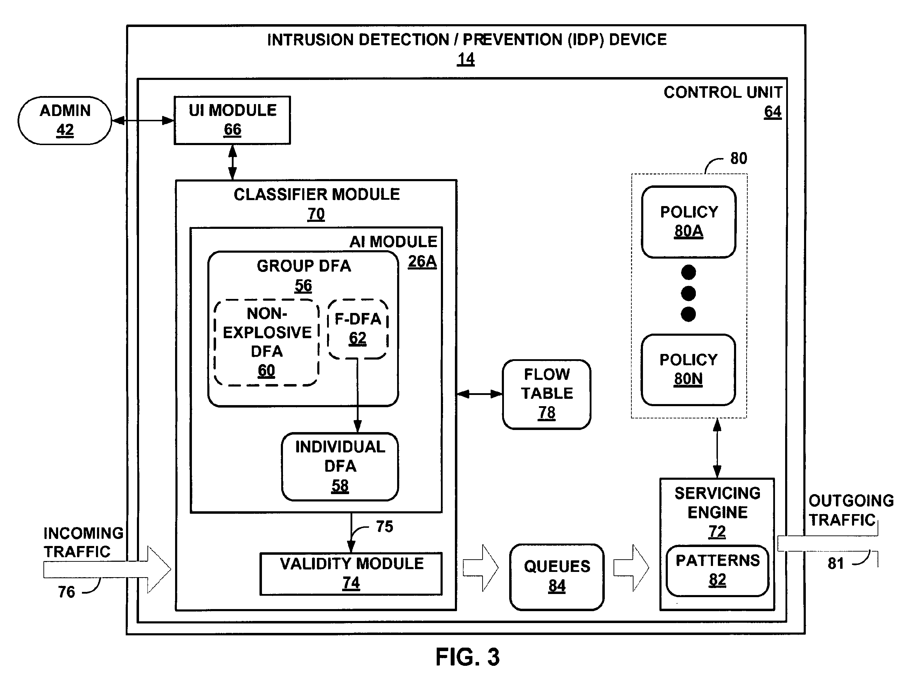

FIG. 3 is a block diagram illustrating IDP device 14 of FIG. 1 in more detail. IDP device 14 includes control unit 64, which may comprise hardware, e.g., one or more of a programmable processor, a Field Programmable Gate Array (FPGA), an Application Specific Special Product (ASSP), an Application Specific Integrated Circuit (ASIC), an integrated circuit, etc., and a computer-readable storage medium or memory, e.g., static memory (a hard drive, an optical drive, a disk drive, FLASH memory, etc.) and/or dynamic memory (a Random Access Memory or RAM, dynamic RAM or DRAM, etc.). In some instances, the computer-readable storage medium may comprise instructions, such as those used to define a software or computer program, that cause the above listed programmable processor to perform the dynamic policy provisioning techniques described herein.

Control unit 64 includes a user interface module 68 ("UI module 68"), a classifier module 70 and a servicing engine module 72 ("servicing engine 72"). Each of these modules 68-72 may comprise hardware, software or any combination thereof to perform the below described functions attributed to each. In some embodiments, control unit 64 may comprise one or more programmable processors that each executes one or more of modules 68-72 as software or computer programs, e.g., instructions. In other embodiments, control unit 64 may comprise one or more integrated circuits that implement one or more of modules 68-72. The techniques therefore should not be limited to any one implementation of the techniques described herein.

UI module 68 represents a module for interfacing with a user, such as admin 42, or another computing device.

UI module 68 may be substantially similar to UI module 38 described above with respect to router 12 of FIG. 2. UI module 68 may present one or more graphical user and/or text-based user interfaces by which admin 42 or another computing device may configure IDP device 14. UI module 68 may, in some embodiments, enable script-based configuration by way of the text-based user interface, such as a command line interface (CLI).

Classifier module 70 represents a module that may classify each of the packets based on information extracted from each packet. One way in which classifier module 70 may classify a packet is to classify each packet as belonging to a particular flow. That is, classifier module 70 may determine to which flow a particular one of the packets of incoming network traffic 76 corresponds by extracting information referred to as a "five-tuple" from each of the packets. As described above, each flow represents a flow of packets in one direction within the network traffic. A five-tuple, also as described above, comprises a source Internet Protocol (IP) address, a destination IP address, a source port, a destination port, and a protocol. Typically, the five-tuple is found within the header of each of the packets and classifier module 70 may parse or otherwise extract the five-tuple from the header of each of the packets to identify to which flow each of the packets corresponds. Classifier module 70 may also extract and utilize additional information to identify a flow, such as source media access control ("MAC") address and destination MAC address.

Based on this five-tuple, classifier module 70 may access flow table 78, which may be substantially similar to flow table 37, to determine which of policies 80A-80N ("policies 80") apply to each of the packets of incoming traffic 76. Each of policies 80 may identify a subset of attack patterns, which are shown in FIG. 3 as patterns 82. Flow table 78 may therefore maintain flows as entries, or flow entries. Each flow entry may store the identifying five-tuple and a reference to one of policies 80. Classifier module 70 may access flow table 78 to determine a flow to which each packet corresponds as well as an associated one of policies 80. Classifier module 70 may then tag or otherwise mark each packet to indicate an associated one of policies 80 to apply to each tagged packet. Classifier module 70 may tag each packet by storing metadata or other information with each packet in a queue, such as one of queues 84. Queues 84 may comprise pre-processing queues that store packets in a first-in, first-out (FIFO) manner prior to processing or application of an associated one of policies 80.

Classifier module 70 may also, as another way of classifying incoming packets, classify packets by an application to which these packets correspond. Applications may include a Hyper-Text Transfer Protocol (HTTP) application, a Session Initiation Protocol (SIP) application (which, in some instances, may initiate a VoIP session), a Real-time Transfer Protocol (RTP) application (which, in some instances, may provide a transport for the VoIP session), a File Transfer Protocol (FTP) application, or any other network application for delivering content or data particular to a given protocol or application. Classifier module 26 may include the above described AI module 26A by which to classify these packets. AI module 26A may be substantially similar to AI module 26B and perform the techniques described herein in substantially the same manner as that described above with respect to AI module 26B. AI module 26A may implement the techniques described herein to identify an application to which the packet corresponds. Classifier module 70 may also include a validity module 74 substantially similar to validity module 42 described above with respect to deep packet inspection module 40. Validity module 74 may validate application identifier 74 (which may be similar to application identifier 44) in a substantially similar manner to that of validity module 40.

Classifier module 70 may then associate each identified application with different ones of policies 80. That is, AI module 26A may, determine that a first packet, for example, corresponds to an HTTP application, while another packet belongs to an FTP application. Based on these respective classifications, classifier module 70 may associate a first one of policies 80 with the first packet classified as belonging to the HTTP application and associate a second one of policies 80 with the second packet classified as belonging to the FTP application in flow table 78. In this manner, IDP device 14 may adapt the application of policies 80, and thus patterns 82, to different applications, which may enable IDP device 14 to more accurately apply patterns 82 to detect only those network attacks that target a particular protocol or application, while not detecting those that are harmless to each of the respectively identified protocols or applications. By selecting patterns according to identified applications, IDP device 14 limits the consumption of system resources.

Servicing engine 72 represents a module that services or otherwise processes the packets of incoming traffic 76. Servicing engine 72 may service or process each packet by applying one of policies 80 to each packet. Each of policies 80 may identify a different set of patterns 82 to apply, where each policy identifies at least one pattern different from every other one of policies 82. Servicing engine 72 may maintain a full set of patterns 82 that identify a full set of network attacks. Each of policies 82 may identify a set of patterns by indicating whether to apply the full set of patterns 82 or a subset of the full set of patterns 82. After processing each of the packets of incoming traffic 76, servicing engine 72 may, based the application of the corresponding policies 80, forward those packets as outgoing traffic, such as outgoing traffic 81.

As described above with respect to router 12 of FIG. 2, admin 42 may initially upload or otherwise input a group DFA 56 and individual DFA 58 via interactions with a user interface presented by UI module 66. Control unit 64 may, again as described above, install or otherwise configure AI module 26A with group DFA 56 and individual DFA 58. Once installed, admin 42 may enable or otherwise activate IDP device 14 such that IDP device 14 begins receiving packets as incoming traffic 76.

In response to receiving these packets, classifier module 70 may, much like data plane 36B of router 12, parse a five-tuple from each of the packets and perform a lookup in flow table 78 using the five-tuple as a key. If flow table 78 stores a flow entry that corresponds to the five-tuple, classifier module 70 may access this entry and extract one of policies 80 previously associated with the packet flow identified by the five-tuple extracted from the packet. Upon determining this one of policies 80, classifier module 70 may tag the packet in the above described manner and store the packet to one of queues 84. Servicing engine 72 may then "pop" or retrieve this packet from the queue along with the associated tag and select the one of policies 80 identified by the tag. Servicing engine 72 applies a subset of patterns 82 identified by the selected one of policies 80, where the subset in some instances may comprise the full set of patterns 82. Based on the application of one or more of patterns 82 identified by the one of policies 80, servicing engine 72 may forward the packet as outgoing traffic 81 or take some other security action, such as dropping the packet or quarantining the packet.

However, if flow table 78 does not store an entry for the five-tuple extracted from the packet, classifier module 70 may invoke AI module 26A to process the packet in accordance with the techniques described herein. In other words, AI module 26A may traverse group DFA 56 in the manner described above by setting the first, second and third markers, cursors or pointer constructs and incrementing the third current marker until either reaching a terminal node of the group DFA data structure or incrementing the third current marker to the second, end marker without reaching a terminal node.

Upon reaching a terminal node of the graph data structure represented as group DFA 56, AI module 26A may either identify an application or traverse individual DFA 58 associated with the terminal node, as described above. If, in other words, the terminal node indicates an application, AI module 26A output a particular application identifier 75 associated with the identified application, which validity module 74 may validate. Assuming successful validation, classifier module 70 may associate the packet and, more particular, the packet flow with the application in flow table 78 by defining a new entry to store this association. Classifier module 70 may also determine which of policies 80 are defined for the identified application and associate this one of policies 80 to the packet flow, again, within the new entry of flow table 78.

If the terminal node alternatively identifies individual DFA 58, AI module 26A may traverse the linked individual DFA 58 in the manner described above with respect to router 12 of FIG. 2 and either identify or fail to identify an application to which the packet corresponds. If an application is identified, AI module 26A may output application identifier 75 associated with the identified application, which validity module 74 may validate. Assuming successful validation, classifier module 70, as described above, determine one of policies 80 associated with the application identified by application identifier 75 and stores this association as a new flow entry within flow table 78.

In some instances, classifier module 70 need not affirmatively determine which of policies 80 correspond to the identified application by performing a lookup in a classification table or other data structure not shown in FIG. 3 for ease of illustration purposes. Rather, application identifier 75 may directly identify a corresponding one of policies 80 and classifier module 70 may store application identifier 75 to the newly created flow entry within flow table 78. In these instances, application identifier 75 may identify not only the application but also one of policies 80.

In instances where AI module 26A fails to identify an application, such as when traversal of either group DFA 56 or individual DFA 58 ends without reaching a terminal node, AI module 26A may output a general application identifier 75 in a manner similar to that described above with respect to router 12 of FIG. 2. Classifier module 70, in this instance, may take one or more actions in response to this general application identifier 75. In one instance, classifier module 70 may drop the packet. In other instances, classifier module 70 may forward the packet along a separate packet path within IDP device 14 that avoids application of any of patterns 82. In yet other instances, classifier module 70 may queue packet 84 with a tag identifying a policy specifying that servicing engine 72 apply all of patterns 82. In still other instances, classifier module 70 may queue packet 84 with a tag identifying a policy specifying that servicing engine 72 apply a minimal subset of patterns 82.

In this manner, a network device, such as IDP device 14, may implement the techniques to more efficiently identify application to which a packet of a new packet flow corresponds. Based on this identified application, IDP device 14 may determine one of policies 80 by which to apply a subset or full set of patterns 82 and thereby provide differentiated, per flow application of patterns 82 to packets. As the techniques may enable more efficient application identification, which comprises an aspect of pattern application, IDP device 14 may not only more efficiently identify applications but, as a result of more efficient application identification, more efficiently apply patterns 82 to packets received for new packet flows. Accordingly, the techniques may improve packet throughput with respect to packets identified as corresponding to new packet flows.

While described herein with respect to separate network devices 12 and 14, a single network device may implement both aspects of router 12 and IDP device 14. In these instances, the single network device is usually characterized as a router having a service plane in addition to control and data planes, such as control and data planes 32A, 32B shown in FIG. 2. This service plane may comprise one or more service cards, wherein at least one of the service cards may comprise a service card that implements the functionality described above with respect to IDP device 14. In this respect, the control plane of this router may include a deep packet inspection module similar to module 40 in which AI module 26B resides, while the service card may comprise a classifier module similar to module 70 in which AI module

26A resides.

Alternatives of this single combined router / IDP device embodiment may also include instances where another service card implements application identification. In this instance, both the IDP service card and the control plane may direct packets to this AI service card for application identification and receive packets back along with a validated application identifier. Accordingly, the techniques should not be limited to single device but may also be implemented by any combination of these devices as well as other devices. Moreover, the techniques may be implemented by a dedicated service card which may be coupled to any network device to provide efficient application identification in accordance with the principles of the invention as set forth in this disclosure.

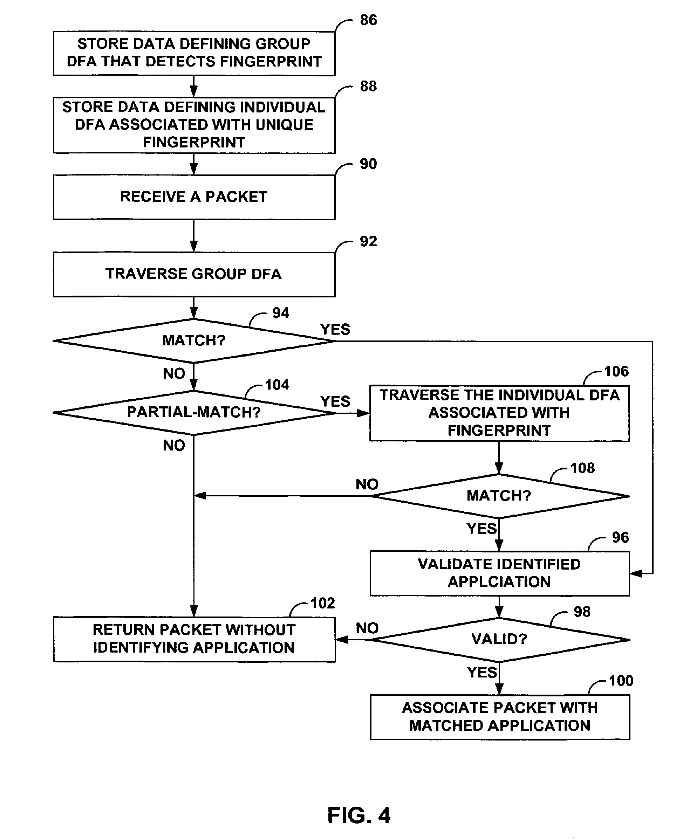

FIG. 4 is a flowchart illustrating exemplary operation of a network device, such as either or both of router 12 and IDP device 14 of FIG. 1, in performing the techniques described herein. The techniques may further be described with reference to particular aspects of these two devices 12 and 14, as shown in FIGS. 2 and 3. While described relative to these two particular types of network devices, the techniques may be implemented by any network device that performs application identification, as well as, any network device that utilizes DFA to identify patterns defined by corresponding regular expressions outside the context of application identification.

Initially, both or either of router 12 and/or IDP device 14 may receive data defining group DFA 56 that detects signature fingerprints from an administrator or provisioning system and store or install this data, as described above (86). Both or either of router 12 and/or IDP device 14 may also receive and store data defining individual DFA 58 that is associated with the unique fingerprint or f-DFA 62 (88). Once stored or installed within respective AI modules 26, the user, e.g., admin 42, may enable or other active both or either of router 12 and/or IDP device 14 to receive a packets, and AI modules 26 may receive one or more of these packets and traverse group DFA 58 in the manner described above (90, 92).

In response to these packets, AI modules 26 may, in some instances, first classify these packets by flow. That is, in some instances, AI modules 26 may determine whether the flow to which the packet corresponds is a Client-To-Server (CTS) flow or a Server-To-Client (STC) flow. AI modules 26 may, in these instances, maintain a first group DFA 56 and first individual DFA 58 for CTS classified flows and a second group DFA 56 and second individual DFA 58 for STC classified flows, as particular patterns identified by regexs may occur only within one of these two contexts. While not shown specifically in the flowchart of FIG. 4, AI modules 26 may implement this additional classification in order to optimize pattern matching and further increase the speed with which pattern matching occurs. In these instances, AI modules 26 may traverse the particular one of group DFAs 58 based on the determined classification.

AI modules 26 may determine based on the traversal whether a match has occurred, e.g., whether AI module 26 traversed group DFA 56 and reached a terminal node identifying an application (94). If a match occurs ("YES" 94), AI modules 26 may output an application identifier or other information indicating the identified application, which validity modules 42, 74 may respectively validate in the manner described above (96). If determined to be valid ("YES" 98), validity modules 42, 74 may associate the packet with the matched or identified application (100). If determined not to be valid ("NO" 98), validity modules 42, 74 may associate the packet with a general application identifier and return the packet without any particular application identifier, which in effect returns the packet without identifying an application (102).

If, however, a full match does not occur while traversing group DFA 56 ("NO" 94), AI modules 26 may determine whether a partial match occurs (104). A partial match, as used herein, refers to instances where AI modules 26 traverse group DFA 56 and reach a terminal node that does not identify an application but instead identifies individual DFA 58. IN this respect, a partial match refers to matching a signature fingerprint extracted from an explosive regex. The match is "partial" in that only the portion, fragment or segment of the explosive regex represented by the signature fingerprint is matched rather than the entire string defined by the explosive regex. If a partial match occurs ("YES" 104), AI modules 26 may traverse individual DFA 58 associated with the fingerprint, e.g., the terminal node of the merged f-DFA, as described above (106).

When traversing individual DFA 58, AI modules 26 may then determine whether a match, which may be referred to as a "full" match, occurs as described above (108). In instance where either the partial match does not occur when traversing group DFA 56 ("NO" 104) or the match does not occur when traversing individual DFA 58 ("NO" 108), AI modules 26 may, as described above, return the packet without identifying any particular application (102). However, if traversal of independent DFA 58 results in a match, e.g., reaching a terminal node ("YES" 108), AI modules 26 may output an application identifier that identifies a particular application to which the packet corresponds, which validity modules 42, 74 may validate (96). If valid ("YES" 98), validity modules 42, 74 may associate the packet with the matched or identified application (100). If not valid ("NO" 98), validity modules 42, 74 may associate the packet with a general application identifier or return the packet without identifying an application to which the packet corresponds (102).

While described above with reference to a plurality of AI modules 26 for ease of discussion, the techniques may be implemented by one or both of AI modules 26. The forgoing discussion is not meant to suggest that AI modules 26 perform the same operations at the same time or even concurrently. Rather, discussion of AI modules 26 suggests that each of AI modules 26 may perform the techniques described herein independent of one another. The techniques should not therefore be limited to require that both AI modules 26 operate in synch or perform the same steps in tandem. However, in some limited circumstances, AI modules 26 may perform the same operations concurrently, particularly when a provisioning system couples to both of router 12 and IDP device 14 and uploads group DFA 56 and individual DFA 58 to both at the same time. In this limited circumstance, both of AI modules 12 may install group DFA 56 and DFA 58 concurrently.

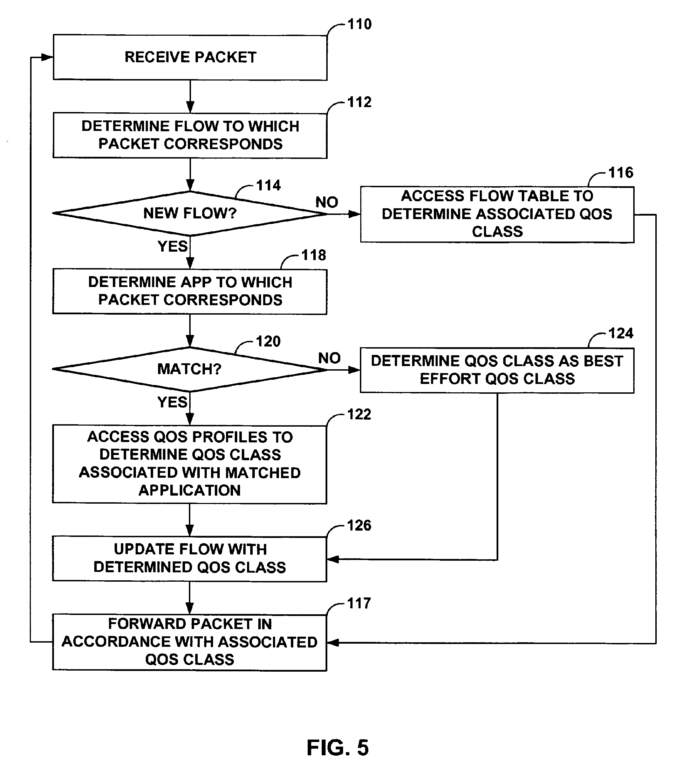

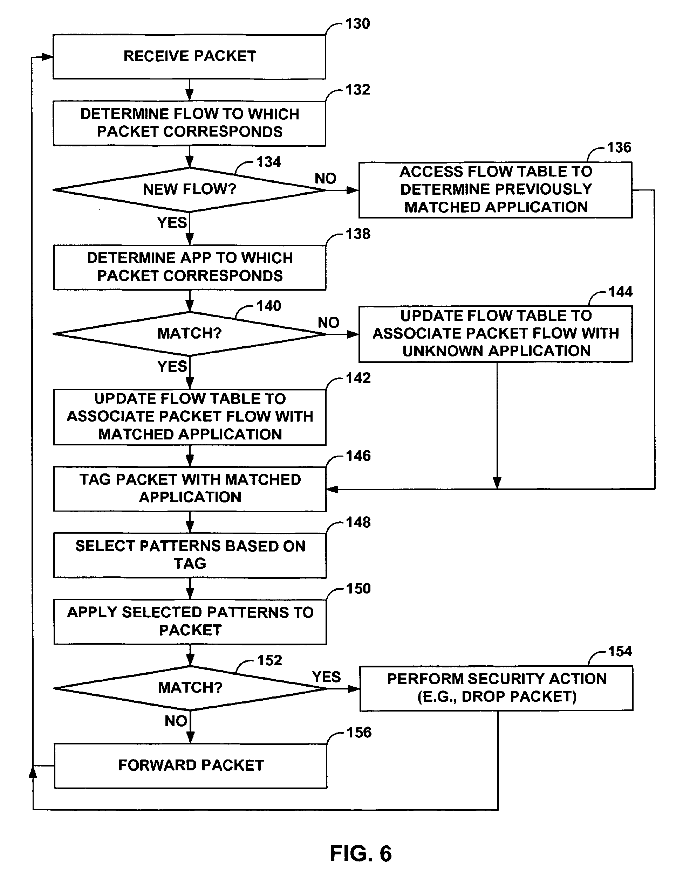

The following discussion of the techniques represents general identification of application without providing any context. The following FIGS. 5 and 6 provide additional contexts in which application identification may be employed.

FIG. 5 is a flowchart illustrating exemplary operation of router 12 of FIG. 2 in implementing the techniques to more efficiently identify applications to which packets correspond. As described above, router 12 may first receive, store and install both a group DFA 56 and an individual DFA 58 within AI module 26B. After this installation, router 12 and, more particularly, control unit 30 may receive a packet via one of IFCs 48, a corresponding one of inbound network links 50 and a corresponding one of paths 54 (110).

Data plane 32B of control unit 30 may receive the incoming packet and determine a flow to which the incoming packet corresponds (112). Data plane 32B, as described above, may extract a five-tuple from the packet and use this five-tuple as a key to determine whether flow table 37 includes a flow entry associated with the extracted five-tuple. In this manner, data plane 32B may determine whether or not the extracted five-tuple is associated with a new flow (114). If flow table 37 includes a flow entry that corresponds to the extracted five-tuple within flow table 37, data plane 37 may determine that the packet is associated with a current or already defined flow ("NO" 114). As a result, data plane 37 may access the flow entry associated with the extracted five-tuple to determine a QoS class associated with the previously identified flow and forward the packet in accordance with the associated QoS class in the manner described above (116, 117).

However, if data plane 37 determines that flow table 37 does not currently store an entry associated with the extracted five-tuple, data plane 37 may determine that the extracted five-tuple corresponds to a new packet flow ("YES" 114). Upon determining that the five-tuple corresponds to a new packet flow, data plane 32B may forward the packet to control plane 32A, whereupon deep packet inspection module 40 may determine an application (or "app" for short) to which the packet corresponds in accordance with the techniques described herein (118). That is, AI module 26B may implement the techniques described in detail above to identify an application to which the packet corresponds. AI module 26B may either determine a match and return a particular application identifier or return the packet without matching the packet to an application, as described above (120).

Assuming AI module 26B matches the packet to an application and validity module 42 verifies the resulting application identifier ("YES" 120), deep packet inspection module 40 may access QoS profiles 46 based on the application identifier to determine a QoS class associated with the matched application (122). Alternatively, if no match is found and AI module 26B outputs a general application identifier, which validity module 42 may always validate ("NO" 120), deep packet inspection module 40 may determine a QoS class for the packet flow as a best effort QoS class (124). In either instance, deep packet inspection module 40 returns one or more of the packet, the determined application identifier, and the determined QoS class to data plane 32B, which creates a new flow entry within flow table 37 and updates this entry with the determined QoS class (126). Data plane 32B may then forward the packet in accordance with the associated QoS class in the manner described above (117).

FIG. 6 is a flowchart illustrating exemplary operation of IDP device 14 of FIG. 3 in implementing the techniques to more efficiently identify applications to which packets correspond. As described above, IDP device 14 may first receive, store and install both a group DFA 56 and an individual DFA 58 within AI module 26A. After this installation, IDP device 14 and, more particularly, control unit 64 may receive one or more packets, which are represented in FIG. 3 as incoming traffic 76 (130). Although not shown in FIG. 3, control unit 64 may receive the packet in a manner substantially similar to router 12 of FIG. 2, e.g., via an interface card, incoming network link and path.

Much the same as data plane 32B of router 12, classifier module 70 may first receive the packet, then extract a five-tuple from the packet to determine a flow to which the packet corresponds, and access flow table 78 based on the extracted five-tuple to determine whether the packet is associated with a new or current packet flow (132, 134). If an entry exists within flow table 78 for the extracted five-tuple ("NO" 134), classifier module 70 may access this entry within flow table 78 to determine one of policies 80 associated with the current packet flow (136). If flow table 78 does not include an entry associated with the extracted five-tuple ("YES" 134), classifier module 78 may determine that the packet is associated with a new flow and, based on this determination, determine in accordance with the techniques described herein an application to which the packet corresponds (138). That is, AI module 26A may implement the techniques described in detail above to identify an application to which the packet corresponds. AI module 26A may either determine a match and return a particular application identifier or return the packet without matching the packet to an application, as described above (140).

Assuming AI module 26A matches the packet to an application and validity module 74 verifies the resulting application identifier ("YES" 140), classifier module 70 updates flow table 78 to associate the packet with the matched application (142). In other words, classifier module 70 creates a new entry within flow table 78 and associates the five-tuple with the matched application identifier. In some instances, classifier module 70 may also determine one of policies 80 associated with the matched application and store the determined one of policies 80 to the flow entry. Also, in some embodiments, the application identifier may identify not only an application but also one of policies 80 and by storing the application identifier to the new flow entry, classifier module 70 may also store the determined one of the policies 80 as well.

However, if AI module 26A does not match the packet to an application or matches the packet to an application but validity module 74 invalidates the matched application, classifier module 70 may update flow table 78 to associate the packet flow with an unknown application (144). In any event, classifier module 70 may then tag the packet in the manner described above with the matched application, which may also identify one of policies 80 (146). In the case of an unknown application, classifier module 70 may not always tag the packet, but may instead drop, quarantine or otherwise perform some other security action with respect to these packets. Classifier module 70 may also iterate a counter for the packet flow and, if the counter exceeds a threshold number, such as 10, 20 or 100, take one of the forgoing security actions. Alternatively, classifier module 70 may tag packets associated with unknown applications to identify all of patterns 82 or only a minimal subset.

Once tagged, classifier module 70 may store the packet and the corresponding tag to queues 84, whereupon servicing engine 72 may pop or retrieve the packet and the corresponding tag from queues 84 and apply one or more of patterns 82 based on the tag. In other words, servicing engine 72 may select one or more of patterns 82 based on the tag (148). To illustrate servicing engine 72 may access the application identifier stored to the tag and use this application identifier as a key to retrieve a corresponding one of policies 80. The corresponding one of policies 80 may identify a subset of patterns 82 to apply to the packet. Servicing engine 72 may then apply the identified or selected ones of patterns 82 to the packet (150). If any one of patterns 82 result in a match after being applied ("YES" 152), servicing engine 72 may take or perform an appropriate security action, which may include dropping or quarantining the packet (154). If none of the applied ones of patterns 82 result in a match, servicing engine 72 may forward the packet, as described above (156).

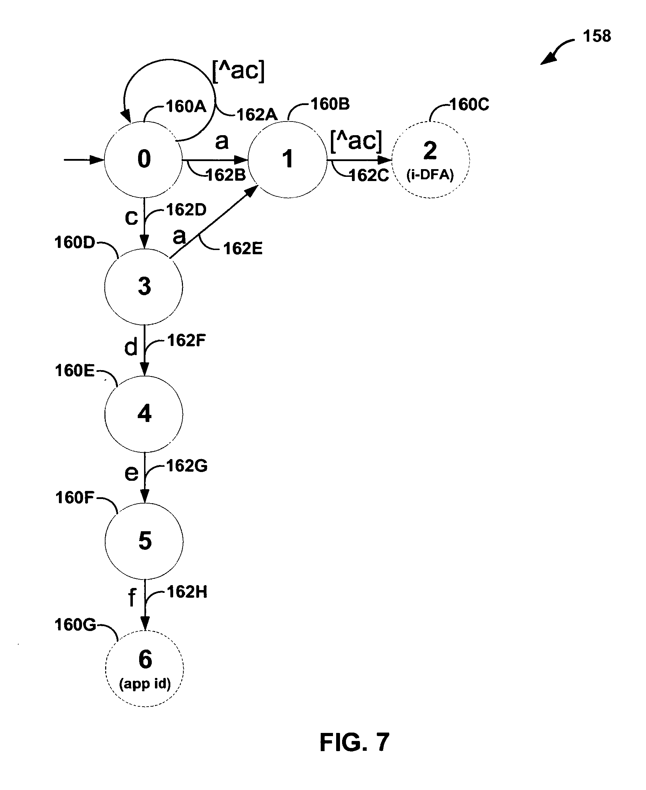

FIG. 7 is a block diagram illustrating a group DFA graph data structure 158 generated in accordance with the techniques described in this disclosure. Group DFA graph data structure 158 includes a plurality of nodes 160A-160G ("nodes 160") respectively identifying states 1-6. Each of arrows 162A-162H represents links or transitions between nodes and may be referred to collectively as "transitions 162." In terms of defining transitions 162, each of transitions 162 may represent a pointer linking one of nodes 160 to another node 160, except for the starting transition, which is not labeled or identified as transition for this reason. As graph data structure 158 defines a DFA, each of transitions 162 is associated with a corresponding condition. Transition 162A is associated with a condition "[^ac]," which indicates that if a character of the input stream or string is not (as represented by the "^" character in the formal language of the corresponding regex) either an "a" or a "c," then transition from node 160A to node 160A.

The group DFA shown in FIG. 7 as graph data structure 158 represents a merger of two DFA, a non-explosive DFA generated from a regex of "/cdef/" and a f-DFA generated based on a signature fingerprint of "/a[^a]/" extracted from the explosive regex of "/a[^a][^a]b/." Notably, the number of characters of nodes 160 equals 6 which also equals the combined total number of characters of the non-explosive regex (i.e., 4) and the fingerprint (i.e., 2). The group DFA therefore represented by graph data structure 158 is therefore non-explosive. By traversing graph data structure 158, an AI module, such as one of AI modules 26 of the proceeding FIGS. 1-6 may match either the non-explosive regex or the fingerprint.

To match the non-explosive regex, the AI module traverses nodes 160A and 160D-160F of graph data structure 158 to reach node 160G. Node 160G comprises a terminal node, which is indicated by a dashed circle rather than a solid circle. Node 160G, as it indicates a match of a non-explosive regex, indicates an application identifier ("app id") associated with a particular application. To match the fingerprint, the AI module traverses nodes 160A and 160B to reach node 160C. Node 160C also comprises a terminal node, but instead of identifying an application identifier, node 160C identifies an individual DFA ("i-DFA"). Node 160C may comprise a pointer or other linking marker or identifier that indicates an individual DFA, such as individual DFA 58, generated from the explosive regex from which the signature fingerprint was extracted. In this respect, an individual DFA 58 may be associated to one or more nodes of the group DFA.

While shown above as a merger of only two DFAs for ease of illustration purposes, group DFA data structure 158 may comprise a DFA formed by merging a plurality of DFAs with at least one non-explosive DFA and at least one f-DFA linking the resulting group DFA to an individual DFA. The techniques therefore should not be limited to this simplified exemplary embodiment.

Moreover, while described herein as matching only a single application, AI modules may traverse group DFA 56 or both group DFA 56 and individual DFA 58 and determine multiple matching applications. In this multiple match instance, these AI modules may select the matching application associated with a lowest order number. The order number may indicate how often a packet form a certain application occurs, where the most popular applications typically have the lowest order number. In this multiple match instance, therefore, the AI modules may select the application from the plurality of matching applications having the lowest order number. Again, the techniques should not be limited to the embodiment described above but may include this multiple match instance and any process by which to select one of the plurality of matched applications.

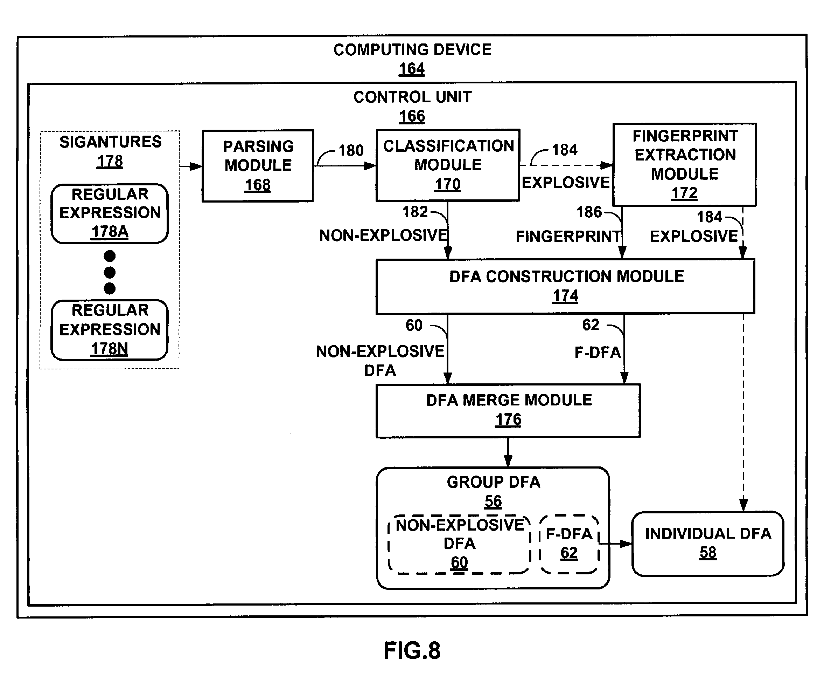

FIG. 8 is a block diagram illustrating an exemplary embodiment of a computing device 164 that implements the techniques described herein to generate group DFA 56 and individual DFA 58 shown in FIGS. 1-3. Computing device 164 may comprise any type of computing device, including a network device, such as a provisioning system, a server, a router, an IDP device, or any other network device, as well as general computing devices, such as a computer or a workstation. Computing device 164 may generate group DFA 56 and individual DFA 58 and automatically, e.g., without user or administrator input, transmit and install group DFA 56 and individual DFA 58 stored on remote network devices, such as router 12 and IDP device 14. Alternatively, computing device 164 may store group DFA 56 and individual DFA 58 to a memory or storage device for later access by an administrator, such as admin 42. Admin 42 may then install group DFA 56 and individual DFA 58 in the manner described above.

As shown in FIG. 8, computing device 164 includes a control unit 166. Control unit 166 may comprise one or more processors (not shown in FIG. 8) that execute software instructions, such as those used to define a software or computer program, stored to a computer-readable storage medium (again, not shown in FIG. 8), such as a storage device (e.g., a disk drive, or an optical drive), or memory (such as Flash memory, random access memory or RAM) or any other type of volatile or non-volatile memory, that stores instructions to cause a programmable processor to perform the techniques described herein. Alternatively, control unit 166 may comprise dedicated hardware, such as one or more integrated circuits, one or more Application Specific Integrated Circuits (ASICs), one or more Application Specific Special Processors (ASSPs), one or more Field Programmable Gate Arrays (FPGAs), or any combination of one or more of the foregoing examples of dedicated hardware, for performing the techniques described herein.

Control unit 166 includes a parsing module 168, a classification module 170, a fingerprint extraction module 172, a DFA construction module 174 and a DFA merger module 176. Parsing module 168 represents a hardware and/or software module that performs an initial parsing operation in order to identify particular characters of the regex and instantiate particular portions of the regex defined by these identified characters. For example, parsing module 168 may identify an "I" character that represents an "or" operation, split the regex into one or more sub-regexes defined by this "I" character and instantiate the sub-regexes each as a separate regex. As an illustration, a regex may be defined as "gray|grey," which indicates that a match can occur upon matching "gray" or "grey." Parsing module 168 may parse this exemplary regex by first identifying whether this regex includes the "I" character and, upon so determining that the regex includes this character, identifying one or more sub-regexes defined by the "I" character. In this case, the regex includes two sub-regexes of "gray" and "grey." Parsing module 168 may parse these two sub-regexes and instantiate these each as a separate regex of "gray" and "grey."

Classification module 170 may represent a hardware and/or software module that classifies each regex received from parsing module 168 as either explosive or non-explosive. Classification module 170 may, as described briefly above, classify these regexes by determining a level of explosiveness for each regex. Typically, state explosion occurs when combining regexes that contain some degree of ambiguity. This ambiguity generally manifests itself as characters that facilitate more powerful pattern matching.

For example, a pattern, referred to as "A," with A equal to the string "something" (which may be represented in the formal language as "A=/something/") is an unambiguous pattern in that only definite characters are used to define this pattern. Another pattern, referred to as "B," with B equal to "[ph]ing" (or in the formal language "B=/[ph]ing/") may also be unambiguous in that the "[ph]" part of B requires either the first character to be a "p" or an "h." Combining two DFAs generated from these two patterns A and B or $DFA_A$ and $DFA_B$ may result in a group DFA which size is close to the sum of the sizes of each of $DFA_A$ and $DFA_B$. In other words, the size of $DFA_A$ (which may be denoted at "|A|" equals 11 and the size of $DFA_B$ or |B| equals 6. The group DFA resulting from the merger of $DFA_A$ and $DFA_B$ (or |A+B|) equals 23. Thus, the sum of the individual DFAs equals 17, which is close to 23, i.e., the size of the merged DFA. Each of regexes A and B may therefore be considered unambiguous and therefore non-explosive.

However, considering another example, a third regex, referred to as "C," with C equal to the pattern "a...b" (or "C=/a...b/" in the formal language) is ambiguous in that the pattern is open-ended. The C pattern searches for a first character "a" and the last character "b." The C pattern includes the "..." to indicate that any ambiguous number of characters may reside between the character "a" and the character "b" and the pattern may still match. Combining this pattern with pattern A may lead to super-linear size growth in the resulting merged DFA. Here, |A| equals 11 and |C| equals 34 but the resulting merger or |A+C| equals a size of 109. This state explosion may occur as a result of replicating pattern A multiple times in the combined or merged DFA to account for the cases where pattern C is ambiguous, i.e., the "..." Anytime there is an ".", the two DFAs, i.e., $DFA_A$ and $DFA_C$, interact and the merged DFA needs to be split to a state that matches "[^s]" and a state that matches "s" to keep track of the matching. The amount of replication or the extent of state explosion may therefore depend on the degree of ambiguity within a given pattern to be combined with pattern A and the extent of the interaction between merged patterns. In this respect, merging just one ambiguous regex, such as pattern C, may cause significant state explosion and thereby drastically increase the size and corresponding memory consumption of the resulting group DFA.

Classification module 170 may implement an algorithm that approximates explosiveness using on the following equation (1):

$$\beta(X) = \frac{|X + T|}{|X| + |T|} \tag{1}$$

In equation (1), the Greek letter beta, $\beta$, represents the explosion factor and $\beta(X)$ represents the explosion factor of regular expression or pattern "X." The letter "T" represents a test pattern or regular expression. The "$|X+ T|$" represents the size of the resulting combined or merged two DFAs, $DFA_X$ and $DFA_T$, generated from respective regular expressions X and T. $|X|$ represents the size of $DFA_X$ generated from regular expression X, and $|T|$ represents the size of $DFA_T$ generated from regular expression T. The explosion factor may therefore compare the size of the resulting merged DFA to the combined sizes of the individual DFAs, $DFA_X$ and $DFA_T$, Classification module 170 may classify any regular expression whose corresponding explosion factor $\beta$ is greater than one (1) an "explosive" regular expression and those regular expression whose corresponding explosion factor $\beta$ is less than or equal to one (1) a "non-explosive" regular expression.

Fingerprint extraction module 172 represents a hardware and/or software module that extracts signature fingerprints from those regular expressions classification module 170 classifies as explosive. Fingerprint extraction module 172 may extract fingerprints from explosive regular expressions so that each fingerprint satisfies the following requirements:

- The extracted fingerprint is unique among all the fingerprints previously extracted so as to avoid multiple partial matches that can potentially increase the time of the matching phase;
- The extracted fingerprint corresponds to a non-explosive pattern and ideally comprises a pure string rather than a string with ambiguous characters, so as to contain the amount of state replication in the group DFA; and
- The extracted fingerprint's likelihood of matching with a random string is minimal so as to minimize the amount of false partial matches.

Fingerprint extraction module 172 may satisfy the above requirements by implementing the following fingerprint extraction algorithm, as presented below in pseudo-code:

```
If (pattern is anchored)
      If (initial string > 2 bytes) then
             Fingerprint=extract(pattern,|initial string|)
      Else if (last string > 2 bytes) then
             Fingerpri nt=extract(pattern,-|last string|)
       Else if(pattern has a substring > 3 bytes)
             Fingerprint=findlongeststring(pattern)
       Else
             /*
             repeat above search but augment previous strings with ranges, one
             byte per loop, until a fingerprint has Pr >0.001
             */
Else /* unanchored pattern */
      If(pattern has a substring > 3 bytes)
             Fingerprint=findlongeststring(pattern);
      Else
             /*
             augment previous string with ranges until fingerprint has Pr >0.001
             */
End if
```

According to the above pseudo-code, fingerprint extraction module 172 may first determine whether the regex or pattern is anchored. An anchored pattern may comprise a pattern with an unambiguous starting and/or ending character, such as "a", rather than an ambiguous character, such as "*" or ".". If anchored, fingerprint extraction module 172 may next determine whether the initial string is greater than two (2) bytes, e.g., whether the regex includes two or more bytes of unambiguous characters. If so, fingerprint extraction module 172 extracts from the pattern this initial string and sets the fingerprint equal to the initial string. If not, fingerprint extraction module 172 next determines whether the ending anchored string of the regex or pattern is greater than two (2) bytes. If so, fingerprint extraction module 172 may extract the last string and set this last string as the fingerprint for this regex. If neither the starting or the ending or last string are greater than two bytes in size, fingerprint extraction module 172 may determine whether the pattern has a sub-string of size greater than three bytes. If so, fingerprint extraction module 172 may find the longest unambiguous string included within the regex and set this string as the fingerprint for the pattern or regex. If not, fingerprint extraction module 172 may repeat the above search for the fingerprint but augment the previous strings with ranges, one byte per loop, until a fingerprint has a probability of occurring within a random packet ("Pr") that is greater than or equal to 0.001.

Again, in accordance with the above algorithm, if the pattern or regex is determined to not be anchored, fingerprint extraction module 172 may determine whether the regex or pattern has a substring greater in size than three (3) bytes. If so, fingerprint extraction module 172 may find the longest unambiguous string included within the regex and set this string as the fingerprint for the pattern or regex. If not, fingerprint extraction module 172 may repeat the above search for the fingerprint but augment the previous strings with ranges, one byte per loop, until a fingerprint has a probability of occurring within a random packet ("Pr") that is greater than or equal to 0.001.

DFA construction module 174 represents a hardware and/or software module that implements the above described conversion process whereby a regular expression is converted to an NFA and the NFA is converted to a DFA. DFA merge module 176 represents a hardware and/or software module that implements the above described merge process whereby two or more DFAs are merged to form group DFA 56.

Initially, computing device 164 and, more particularly control unit 166 receives regular expression 178A-178N ("regular expressions 178"). Regular expressions 178 may also be referred to as signatures 178A-178N or collectively as signatures 178, as each of regular expressions 178 may identify a signature or pattern unique to a particular application. Control unit 166 may receive these signatures 178 as input entered via a user interface module (not shown in FIG. 8), which control unit 166 may store to a memory or storage device.

In any event, parsing module 168 may perform the above described initial parsing for each of regular expressions 178 and output one or more corresponding parsed regular expressions 180 for each of regular expressions 180. As parsing module 168 may generate one or more parsed regular expressions 180 for each of regular expressions 178, the number of parsed regular expressions 180 may equal or exceed the number of regular expressions 178. This initial parsing ensures that some patterns, such as those that include the OR character "I" for example, do not include a first sub-pattern, such as a sub-pattern before the OR character "I", that is unambiguous but a second sub-pattern, e.g., a sub-pattern after the OR character "|", that is ambiguous and potentially explosive.

To illustrate, a pattern or regular expression defined as "/abcde/a...c/" may include a first unambiguous sub-pattern "/abcde/" that occurs before the OR character "|" and a second ambiguous sub-pattern "/a...c/" that is potentially explosive. Parsing module 168 may parse this exemplary pattern and instantiate the above two sub-patterns as separate parsed regular expressions 180. In this manner, parsing module 168 may divide regular expressions 178 into one or more separately instantiated parsed regular expressions 180.

Classification module 170 may receive parsed regular expressions 180 and compute in the manner described above the explosion factor, beta (β), for each of parsed regular expressions 180. Classification module 170 may then classify each of parsed regular expressions 180 based on the explosion factor beta (β). For each of parsed regular expressions 180, classification module 170 may, as an example, classify those regular expressions 180 for which the determined beta (β) is greater than 1 (β > 1) as explosive and those regular expressions 180 for which the determined beta (β) is less than or equal to 1 (β <= 1) as non-explosive.

Classification module 170 may therefore output non-explosive regular expressions 182 and explosive regular expressions 184 based on the explosion factor, beta (β). DFA construction module 174 may receive non-explosive regular expressions 182 and construct a corresponding non-explosive DFA for each one of non-explosive regular expressions 182. DFA construction module 174 may output these DFAs as non-explosive DFAs 60 to DFA merge module 176. Meanwhile, fingerprint extraction module 172 may receive explosive regular expressions 184 and proceed to extract a signature fingerprint 186 from each of explosive regular expressions 184 in the manner described above. Fingerprint extraction module 172 forwards fingerprint 186 and corresponding explosive regular expressions 184 to DFA construction module 174. DFA construction module 174 generates f-DFA 62 and individual DFAs 58 from respective fingerprints 186 and explosive regular expressions 184.

DFA construction module 174 outputs f-DFA 62 to DFA merge module 176 and stores individual DFA 58 within control unit 166. DFA merge module 176 then, in the manner described above, merges non-explosive DFAs 60 with f-DFAs 62 and outputs group DFA 56, which control unit 166 stores, as shown in FIG. 8 by group DFA 56. At the end of this generation, construction or building process, control unit 166 stores group DFA 56 comprised of non-explosive patterns 60 and f-DFA 62 and one or more individual DFAs 58 that each correspond to a respective one of f-DFA 62. An admin or other user, such as admin 42 may then retrieve these DFAs 56 and 58 and manually load these DFAs 56 and 58 onto network devices, such as router 12 and IDP device 14, or otherwise cause computing device 166 to distribute these DFAs 56 and 58 automatically to the network devices for use in more efficiently performing application identification.

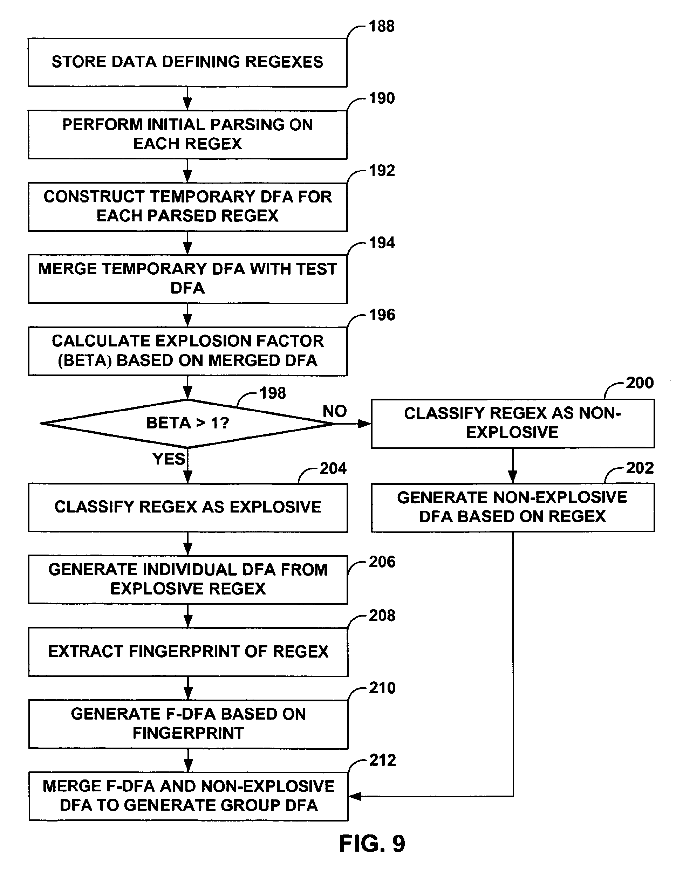

FIG. 9 is a flowchart illustrating exemplary operation of a computing device, such as computing device 164 of FIG. 8, in implementing the techniques described herein so as to generate a group DFA, such as group DFA 56, and an individual DFA, such as individual DFA 58. Initially, control unit 166 of computing device 164 receives and stores data defining signatures 178 or regexs 178 (188). Parsing module 168 may parse each of regular expressions 178 and output one or more parsed regular expressions 180 for each received one of regular expressions 178, as described above (190). Parsing module 168 may forward parsed regular expressions 180 to classification module 170.

Classification module 170 may receive parsed regular expressions 180 and calculate or determine an explosion factor, beta ($\beta$), for each one of parsed regular expressions 180. To determine beta ($\beta$), classification module 170 may first construct a temporary DFA for each one of parsed regular expressions 180 (192). Classification module 170 next merges the temporary DFA with a test DFA to generate a temporary merged DFA (194). Based on the temporary merged DFA and in accordance with the above equation (1), classification module 170 calculates explosion factor, beta ($\beta$) (196).

With respect to equation (1), the variable X refers to the temporary DFA and the variable T refers to the test DFA. If X is unambiguous, beta ($\beta$) is most likely less than one, suggesting that little if any state replication will occur when merging X with other non-explosive DFAs. If, however, X is ambiguous, beta ($\beta$) may be greater than or equal to 1 depending on the degree of ambiguity of X and interaction between X and T. The test pattern from which test DFA is construction may comprise a pure string with no ambiguous characters following the sequence "/\x00 01 02 03 [and so on]\x/" of length in the order of the average length of the regular expression X under testing. The "\x" in the test pattern indicates that the sequence is in hexadecimal notation.

Mathematically, equation (2) below suggests that patterns or regular expressions with a determined beta ($\beta$) greater than 1 are "explosive," with equation (2) as follows:

$$S(n) < N(\alpha^{n-1} + \sum_{i=1}^{n-1} \alpha^i) \qquad (2)$$

In equation (2), the variable $n$ represents the $n$ number of patterns and the variable $N$ indicates the length $N$ of each DFA generated from a corresponding $n$ pattern. The function $S(n)$ represents the number of states after combining the $n$ patterns. It is further assumed that $S(n+1) < \alpha [S(n) + N]$, where X equals $n + 1$th pattern, or in other words that the size of the group DFA after merging X is less than the size of the group DFA without merging X plus the size of the DFA generated from pattern $n$. As a result, after combining two patterns, for example, the above assumption reads as S(2) $< \alpha*2N$, and after three patterns, the above assumption reads as $S(3) < \alpha(N+2\alpha N)$. Abstracting this assumption to $n$ patterns may result in the above equation (2), where the number of states $S(n)$ is generally exponential with n for $\alpha$ greater than 1 ($\alpha > 1$).

For $\alpha$ equal to 1 ($\alpha = 1$), the above equation (2) becomes S(n) < Nn, which is linear with n. Assuming further that only non-explosive expressions are merged ($\beta(X) <= 1$), for every pattern X added at a given stage n to DFA $D_{n-1}$, the size of the combined DFA (or $|X+D_{n-1}|$) divided by the size of the n pattern DFA plus the size of the group DFA formed by merging n-1 patterns, as represented by $|X+D_{n-1}| / (N+S(n-1))$, approximately equals the size of the temporary merged DFA or $|X+T|$ divided by the size of the pattern n plus the size of the test DFA, which may be represented as $|X+T| / (N+|T|)$. Making these assumptions, in other words, $\alpha$ approximately equals $\beta$ and $\beta$ can replace $\alpha$ in the above equation (2). The above assumptions are reasonable insomuch as the merged DFA $D_{n-1}$ only contains non-explosive expressions and therefore the combination of such pattern is also expected to be non-explosive. In order to keep the number of states linear with $n$, it suffices to ensure that $\beta(X)$ less than or equal to one for each pattern in the merged DFA, group DFA 58.

Classification module 170 computes the explosion factor, beta ($\beta$), for each one of parsed regular expressions 180 and determines whether $\beta$ is greater than one (198). If not greater than one ("NO" 198), classifier module 170 classifies the one of parsed regular expressions 180 as non-explosive and forwards this one of parsed regular expressions 180 as non-explosive regular expression 182 to DFA construction module 174 (200). DFA construction module 174 forms or generates a corresponding non-explosive DFA from each received non-explosive regular expression as described above (202).

However, if $\beta$ is determined to be greater than 1, classification module 170 classifies the one of parsed regular expressions 180 as explosive and forwards this one of parsed regular expressions 180 as explosive regular expression 184 to fingerprint extraction module 172 (204). Fingerprint extraction module 172 forwards explosive regular expression 184 or a copy thereof to DFA construction module 174, which generates individual DFA 58 from explosive regular expression 184, as described above (206). Meanwhile, fingerprint extraction module 172 extracts a signature fingerprint 186 from explosive regular expression 184 (208).

Fingerprint extraction module 172 may implement the above pseudo-code to extract fingerprint186. In accordance with the algorithm, fingerprint extraction module 172 may begin by traversing explosive regular expression 184 in search of a pure string of at least two bytes. Fingerprint extraction module 172 may first search for a string to serve as a fingerprint in the beginning of the regular expression and then, failing to find a pure string that meets the two byte requirement, search the end of the regular expression. Mathematically, given a random packet, the chances of matching a fingerprint anchored in the first or last two bytes is 1/256*1/256 or 1/65536, which is a very small probability. This probability is represented by the variable Pr. Given an unanchored fingerprint with two bytes, the chances of having a match in a random packet is 1/65536*Z, where Z is the size of the packet. For Z equal to 1500, this probability is two percent (2%), which is quite high compared to the anchored case.

Therefore, for unanchored cases, the algorithm implemented by fingerprint extraction module 172 requires that the fingerprint be represented by a string of at least three bytes to avoid false positive matches. In other words, by increasing the byte length for fingerprints, the variable Pr may be reduced such that the overall percentage of a false match is reduced. The algorithm presented above indicates that a Pr of 1/1000 or 0.1% is the minimum value for Pr that is acceptable to ensure false matches occur rarely if at all. Note, the longer the fingerprint, the higher Pr will be. However, if ambiguities are allowed in fingerprints, e.g., ranges such as "/[a-z]foo/", fingerprint extraction module 172 may then need to limit the size of the fingerprint so as to make sure it will not create state replication. Regardless, fingerprint extraction module 172 may output extract fingerprint 186 to DFA construction module 174, which generates f-DFA 62 from extracted fingerprint186 (210).

DFA construction module 174 may then forward f-DFA 62 and non-explosive DFA 60 to DFA merge module 176, which merges f-DFA 62 and non-explosive DFA 60 to generate group DFA 56 (212). DFA merge module 176 may then store group DFA 56, while DFA construction module 174 may store individual DFA 58. In this manner, computing device 166 may generate and store group DFA 56 and individual DFA 58.

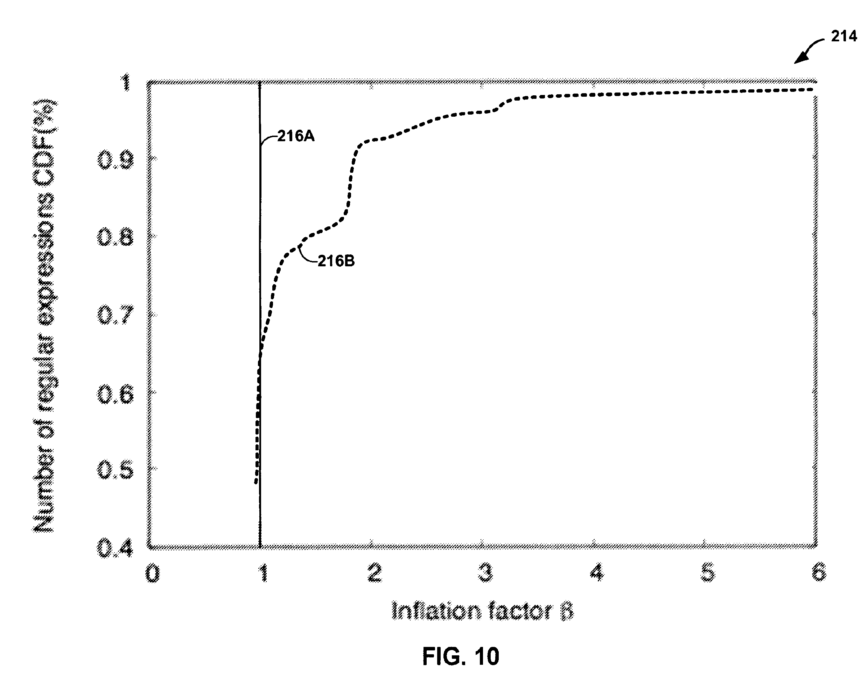

FIG. 10 is a diagram illustrating an exemplary graph 214 depicting explosion factors, beta (β), computed for regular expressions, such as regular expressions 178 of FIG. 9. As shown in FIG. 10, the x-axis of graph 214 represents the inflation factor or explosion factor beta (β), while the y-axis of graph 214 represents a percentage of regular expressions. Graph 214 includes two lines 216A and 216B, where line 216A provides a visual reference line delineating the critical explosion factor of one and line 216B represents the percentage of regular expressions 178 having a given explosion factor. Analyzing line 216B may result in a determination that nearly 60 or so percent of regular expressions 178 are non-explosive, e.g., have a corresponding beta (β) less than or equal to one, while the remaining 40 or so percent are explosive, e.g., have a corresponding beta (β) greater than one. The techniques may therefore be applied in this instance to provide more efficient application identification.

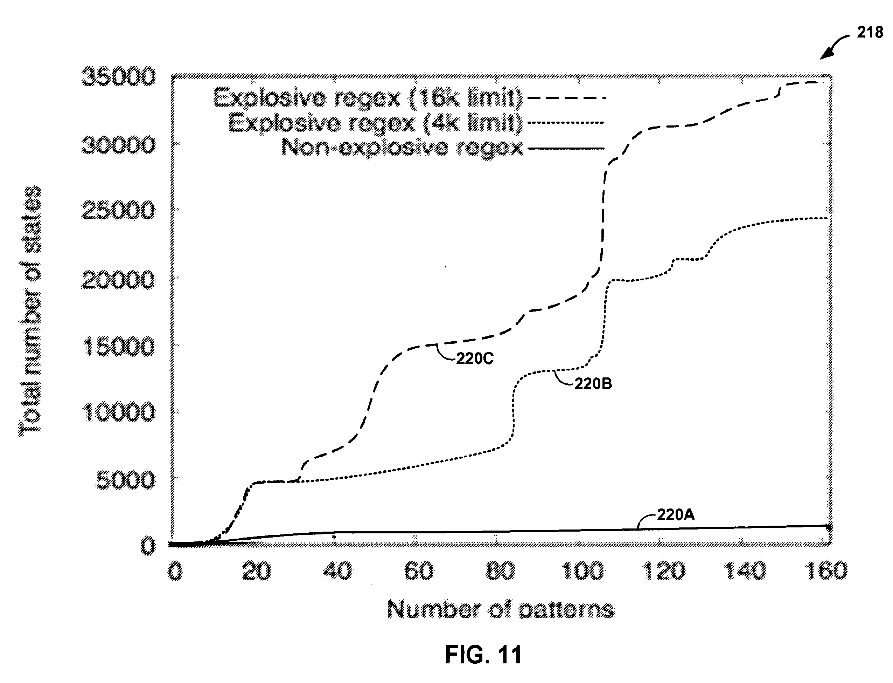

FIG. 11 is a diagram illustrating an exemplary graph 218 depicting three levels of state explosion. As shown in FIG. 11, the x-axis of graph 218 represents the number of patterns or regular expressions 178 and the y-axis of graph 218 represents the number of states that result after merging regular expressions 178. Graph 218 includes lines 220A-220C. Line 220A indicates the total number of states that result after merging each consecutive one or regular expressions 178 determined to be non-explosive. Line 220B indicates the total number of states that result after merging each consecutive one of regular expressions 178 whether determined to be explosive or not, where state replication is limited to 4 kilobytes (or 4k). Line 220C indicates the total number of states that result after merging each consecutive one of regular expressions 178 whether determined to be explosive or not, where state replication is limited to 16 kilobytes (or 16k).

Notably, state replication is relatively linear for non-explosive regular expressions, as shown by the slow growth or relatively flat slope of line 220A. However, when combining explosive regular expressions, as shown by lines 220B and 220C, the total number of states rapidly increases in response to combining these explosive regular expressions. Growth of the explosive pattern set is in some instances nearly exponential and almost 6 times larger than growth of non-explosive patterns after adding or merging 115 patterns or regular expressions. By eliminating these explosive regular expressions from group DFA 56, computing device 166 may significantly reduce the number of states, possibly thereby both improving memory consumption and matching speeds.

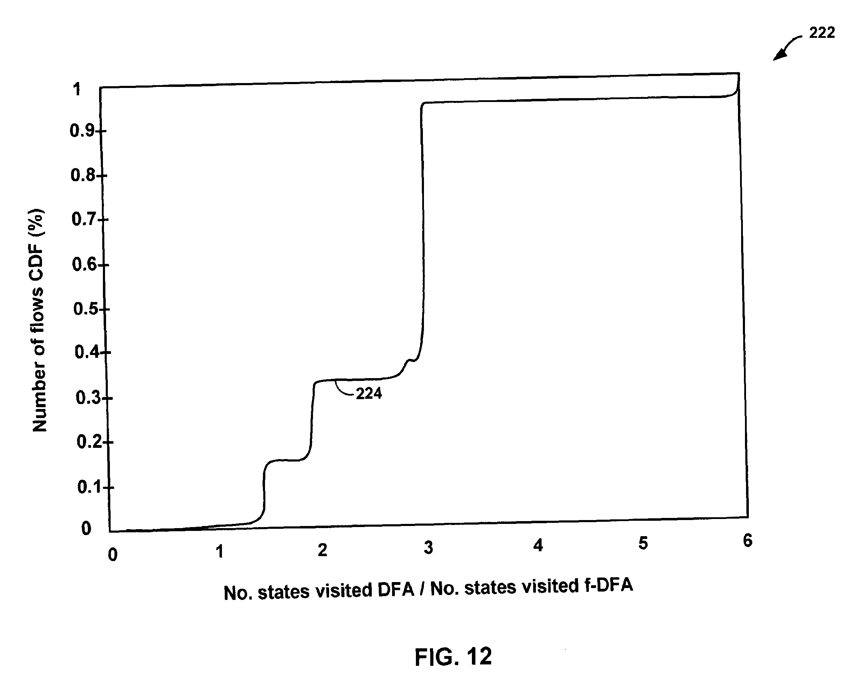

FIG. 12 is a diagram illustrating an exemplary graph 222 depicting the improved matching that may occur when performing application identification in accordance with the techniques described herein. As shown in FIG. 12, the x-axis of graph 222 represents the number ("no.") of states visited when traversing a conventional DFA structure that identify a set of regular expressions 178 compared to the number of state visited when traversing DFAs 56 and 58 that identify the same set of regular expressions. The y-axis of graph 222 represents the number of packet flows by percentage. Graph 222 includes line 224 showing that, for a small number of flows (e.g., less than 10%) the number of states visited is about the same for both the conventional and currently discussed techniques.

Looking further to line 224, for up to 60% of flows, however, conventional techniques traverse nearly three times as many states when compared to the number of states or nodes of DFAs 56 and 58 that were traversed. For the remaining flows, conventional techniques traverse 3, 4 or 5 times as many states when compared to traversal of DFAs 56 and 58. Graph 222 therefore indicates that the techniques may substantially increase matching speed by greatly reducing the number of states or nodes that need be traversed prior to detecting a match.

In this manner, the techniques may reduce memory requirements for application identification by a factor of three. Moreover, the techniques may reduce the number of states per flow by a factor of six. The techniques therefore may reduce both memory consumption and improve matching speeds. In some instances, the techniques may not even require any changes to the DFA construction engine and only minimal changes to update AI modules that traverse the group and individual DFAs. Considering the relatively minor impact yet possible benefits, the techniques may be quickly employed to increase the efficiency with which AI modules implements application identification.

Various embodiments of the invention have been described. These and other embodiments are within the scope of the following claims.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method comprising:

   storing first dat (86) that defines a group deterministic finite automata DFA, wherein the group DFA is formed by a merger of: (i) an individual non-explosive DFA generated from a corresponding non-explosive regular expression, and (ii) a fingerprint DFA, f-DFA, generated from a corresponding signature fingerprint, wherein the non-explosive regular expression comprises a regular expression determined not to cause state explosion during the merge to form the group DFA, wherein the signature fingerprint comprises a segment of an explosive regular expression that uniquely identifies the explosive regular expression, and wherein the explosive regular expression comprises a regular expression determined to cause state explosion during the merge;
   storing second data (88) that defines, for the explosive regular expression, an individual DFA separate from the group DFA, wherein the signature fingerprint uniquely identifies the explosive regular expression from which the individual DFA is generated;
   receiving a packet (90); traversing (106) prior to traversing the individual DFA, the group DFA in order to determine whether the packet includes the segment of the explosive regular expression defined by the signature fingerprint; and
   traversing the individual DFA associated with the signature fingerprint based on the determination that the packet includes the segment of the explosive regular expression to identify a network application to which the packet corresponds.

2. The method of claim 1,
   wherein the non-explosive regular expression defines a first pattern associated with a first network application,
   wherein the explosive regular expression defines a second pattern associated with a second network application,
   wherein the group DFA includes a first plurality of interconnected nodes, wherein at least some of the first plurality of interconnected nodes comprise a first set of transition nodes, one of the first plurality of interconnected nodes comprises a first terminal node and another of the first plurality of nodes comprises a second terminal node, wherein the first set of transition nodes each defines a first transition by which to reach another one of the first plurality of nodes and a first condition associated with the first transition, wherein the first terminal node is associated with the non-explosive DFA and identifies the first network application, and wherein the second terminal node is associated with the f-DFA and identifies the individual DFA generated from the explosive regular expression, and
   wherein the individual DFA includes a second plurality of interconnected nodes, wherein at least some of the second plurality of nodes comprise a second set of transition nodes and one of the second plurality of nodes comprises a third terminal node, wherein the second set of transition nodes each defines a second transition by which to reach another one of the second plurality of nodes and a second condition associated with the second transition, wherein the third terminal node is associated with the explosive DFA and identifies the second network application.

3. The method of claim 2, wherein traversing the group DFA comprises:

extracting a string of characters from the packet;
identifying a first character in the extracted string;
evaluating the first character with respect to the first condition of one of the first set of transition nodes to determine whether the first character satisfies the first condition associated with the first transition defined by the first one of the first set of transition nodes;
identifying a next character after the first character based on the determination that the first character satisfies the first condition associated with the first transition defined by the first one of the first set of transition nodes; and
traversing to a next one of the first plurality of nodes identified by the first transition based on the determination that the first character satisfies the first condition associated with the first transition defined by the first one of the first set of transition nodes,
wherein the next one of the first plurality of nodes comprises the first terminal node, and
wherein traversing the group DFA further comprises traversing the group DFA to reach the first terminal node identifying the first network application,
the method further comprising outputting a first application identifier associated with the first network application upon reaching the first terminal node to identify the first network application as the network application to which the packet corresponds without traversing the individual DFA.

4. The method of claim 3,
wherein the next one of the first plurality of nodes comprises the second terminal node,
wherein traversing the group DFA further comprises:

traversing the group DFA to reach the second terminal node identifying the individual DFA; and
upon reaching the second terminal node, determining that the packet includes the segment of the explosive regular expression defined by the signature fingerprint,

wherein traversing the individual DFA comprises:

upon reaching the second terminal node, identifying the first character in the extracted string;
evaluating the first character with respect to the second condition of one of the second set of transition nodes to determine whether the first character satisfies the second condition associated with the second transition defined by the first one of the second set of transition nodes;
identifying the next character after the first character based on the determination that the first character satisfies the second condition associated with the second transition defined by the first one of the second set of transition nodes; and
traversing to a next one of the second plurality of nodes identified by the second transition based on the determination that the first character satisfies the second condition associated with the second transition defined by the first one of the second set of transition nodes.

5. The method of claim 4, wherein the next one of the second plurality of nodes comprises the third terminal node, and wherein traversing the individual DFA further comprises traversing the individual DFA to reach the third terminal node identifying the second network application,
the method further comprising outputting a second application identifier associated with the second network application upon reaching the third terminal node to identify the second network application as the network application to which the packet corresponds.

6. The method of claim 1, further comprising:

determining whether the packet corresponds to a new flow, wherein traversing the group DFA comprises traversing the group DFA based on the determination that the packet corresponds to a new flow; and
determining an application identifier based on the traversal of either the group DFA or the individual DFA that identifies the network application to which the packet corresponds.

**7.** The method of claim 6,
wherein the method is performed by a router, and
the method further comprising:

selecting a Quality of Service QoS class from a plurality of QoS classes based on the determined application identifier;
associating the selected QoS class with a packet flow to which the packet corresponds; and
forwarding the packet in accordance with the selected QoS class.

**8.** The method of claim 6,
wherein the method is performed by an Intrusion Detection and Prevention IDP device, and
the method further comprising:

selecting a profile from a plurality of profiles based on the determined application identifier, wherein each of the plurality of profiles specify a different set of one or more of a plurality of attack patterns;
associating the selected profile with a packet flow to which the packet corresponds;
applying the set of one or more of the plurality of attack patterns specified by the selected policy to the packet; and
forwarding the packet based on the application of the set of one or more of the plurality of attack patterns specified by the selected policy.

**9.** A network device comprising means for performing the steps of the method recited by any one of claims 1-8.

**10.** A computer-readable medium comprising instructions for causing a processor to perform the steps of the method recited by any one of claims 1-8.

**11.** A method comprising:

storing, with a computing device, data (188) defining a plurality of regular expressions;
determining (198) whether each of the plurality of regular expressions causes state explosion;
classifying, with the computing device, each of the plurality of regular expressions as non-explosive or explosive depending on the determination, wherein one of the plurality of regular expression is classified as non-explosive and another one of the plurality the plurality of regular expressions is classified as an explosive regular expression;
for each of the explosive regular expressions, extracting (208) with the computing device, a corresponding signature fingerprint from the explosive regular expressions, wherein the signature fingerprint comprises a segment of the corresponding one of the explosive regular expressions that uniquely identifies the corresponding one of the explosive regular expressions;
generating (202), with the computing device, a non-explosive Deterministic Finite Automata DFA from each of the plurality of regular expressions classified as non-explosive;
generating (206), with the computing device, an individual DFA, f-DFA from each of the plurality of regular expressions classified as explosive;
generating (210), with the computing device, a fingerprint DFA, f-DFA, from each of the signature fingerprints extracted from a corresponding one of the plurality of regular expressions classified as explosive;
merging (212), with the computing device, the non-explosive DFA and the f-DFA to generate a group DFA, wherein the group DFA comprises at least one node that identifies the individual DFAs and thereby links the group DFA to the individual DFAs; and
automatically forwarding the group DFA and individual DFAs to one or more network devices after generating the group DFA and individual DFAs from the plurality of regular expressions so as to update an application identification module included within each of the network devices with the plurality of regular expressions.

**12.** The method of claim 11, wherein determining whether each of the plurality of regular expressions causes state explosion comprises:

generating a temporary DFA from one of the plurality of regular expressions;
determining a first size of the temporary DFA in terms of a number of nodes included within the temporary DFA;
determining a second size of a test DFA in terms of a number of nodes included within the test DFA;
merging the temporary DFA with the test DFA to generate a merged DFA;
determining a third size of the merged DFA in terms of a number of nodes included within the merged DFA;

comparing the third size determined for the merged DFA to both the first and second sizes determined for the temporary DFA and test DFA respectively; and

determining that the one of the plurality of regular expressions causes state explosion based on the comparison.

13. The method of claim 11, wherein extracting the corresponding signature fingerprint comprises:

analyzing a starting portion of one of the plurality of regular expressions classified as explosive to determine whether the starting portion meets a first requirement to qualify as the signature fingerprint;

analyzing, based on the determination that the starting portion does not qualify, an ending portion of this one of the plurality of regular expressions to determine whether the ending portion meets the first requirement to qualify as the signature fingerprint;

analyzing, based on the determination that the ending portion does not qualify, a middle portion of the one of the plurality of regular expressions classified as explosive to determine whether the middle portion meets a second requirement different from the first requirement to qualify as the signature fingerprint;

iteratively analyzing, based on the determination that the middle portion does not qualify, the one of the plurality of regular expressions until either the starting, ending, or middle portion of this one of the plurality of regular expression satisfies a probability requirement; and

extracting either the starting, ending or middle portion of the one of the plurality of regular expressions under analysis upon determining that the respective portion satisfies the first, second or probability requirement.

14. A computing device comprising means for performing the steps of the method recited by any one of claims 11-13.

15. A computer-readable medium comprising instructions for causing a processor to performing the steps of the method recited by any one of claims 11-13.

## Patentansprüche

1. Verfahren, welches aufweist:

Speichern erster Daten (86), welche eine Gruppe deterministischer endlicher Automaten DFA definieren, wobei die DFA-Gruppe gebildet wird durch eine Verschmelzung von: (i) einem individuellen, nicht-explosiven DFA, der aus einem entsprechenden, nicht-explosiven regelmäßigen Ausdruck erzeugt wurde, und (ii) dem Fingerabdruck DFA, f-DFA, der aus einem entsprechenden Signatur-Fingerabdruck erzeugt wird, wobei der nicht-explosive reguläre Ausdruck einen regulären Ausdruck aufweist, der dafür bestimmt ist, während des Verschmelzens zum Bilden der DFA-Gruppe keine Zustandsexplosion zu verursachen, wobei der Signatur-Fingerabdruck ein Segment eines explosiven regulären Ausdrucks aufweist, der den explosiven regulären Ausdruck eindeutig identifiziert, und wobei der explosive reguläre Ausdruck einen regulären Ausdruck aufweist, der dafür bestimmt ist, während der Verschmelzung eine Zustandsexplosion zu verursachen,

Speichern von zweiten Daten (88), die für den explosiven regulären Ausdruck einen individuellen DFA definieren, der von der DFA-Gruppe getrennt ist, wobei der Signatur-Fingerabdruck in eindeutiger Weise den explosiven regulären Ausdruck identifiziert, aus welchem die individuelle DFA erzeugt wird,

Empfangen eines Paketes (90),

Durchlaufen (106) der DFA-Gruppe vor dem Durchlaufen des individuellen DFA, um festzustellen, ob das Paket das Segment des explosiven regulären Ausdruckes enthält, welcher durch den Signatur-Fingerabdruck definiert wird, und

Durchlaufen der individuellen DFA, die zu dem Signatur-Fingerabdruck gehört, auf Basis der Feststellung, dass das Paket das Segment des explosiven regulären Ausdruckes enthält, um eine Netzwerkanwendung zu kennzeichnen, welcher das Paket entspricht.

2. Verfahren nach Anspruch 1,
wobei der nicht-explosive reguläre Ausdruck ein erstes Muster definiert, das zu einer ersten Netzwerkanwendung gehört,
wobei der explosive reguläre Ausdruck ein zweites Muster definiert, das zu einer zweiten Netzwerkanwendung gehört,
wobei die DFA-Gruppe eine erste Mehrzahl von miteinander verbundenen Knoten aufweist, wobei zumindest einige aus der ersten Mehrzahl miteinander verbundener Knoten einen Satz von Übergangsknoten aufweisen, einer aus der ersten Mehrzahl von miteinander verbundenen Knoten einen ersten Abschlussknoten aufweist und ein weiterer der ersten Mehrzahl von Knoten einen zweiten Abschlussknoten aufweist, wobei der erste Satz von Übergangsknoten jeweils einen ersten Übergang definiert, durch welchen ein weiterer aus der ersten Mehrzahl von Knoten zu erreichen ist, sowie ein erster Zustand, der zu dem ersten Übergang gehört, wobei der erste Abschlussknoten dem nicht-explosiven DFA zugeordnet ist und die erste Netzwerkanwendung kennzeichnet, und wobei der zweite Abschlussknoten zu dem f-DFA gehört und den individuellen DFA kennzeichnet, der aus dem explosiven regulären Ausdruck erzeugt wurde, und

wobei der individuelle DFA eine zweite Mehrzahl von miteinander verbundenen Knoten umfasst, wobei zumindest einige aus der zweiten Mehrzahl von Knoten einen zweiten Satz von Übergangsknoten aufweisen und einer aus der zweiten Mehrzahl von Knoten einen dritten Abschlussknoten aufweist, wobei der zweite Satz von Übergangsknoten jeweils einen zweiten Übergang definiert, durch welchen ein weiterer aus der zweiten Mehrzahl von Knoten zu erreichen ist, sowie ein zweiter Zustand, der zu dem zweiten Übergang gehört, wobei der dritte Abschlussknoten der explosiven DFA zugeordnet ist und die zweite Netzwerkanwendung kennzeichnet.

3. Verfahren nach Anspruch 2, wobei das Durchlaufen der DFA-Gruppe aufweist:

Extrahieren einer Zeichenkette aus dem Paket,
Identifizieren eines ersten Zeichens in der extrahierten Kette,
Auswerten des ersten Zeichens bezüglich des ersten Zustandes eines der Übergangsknoten aus dem ersten Satz, um festzustellen, ob das erste Zeichen die erste Bedingung erfüllt, die zu dem ersten Zustand gehört, welcher durch den ersten in dem ersten Satz von Übergangsknoten definiert ist,
Identifizieren eines nächsten Zeichens hinter dem ersten Zeichen auf der Basis der Feststellung, dass das erste Zeichen die erste Bedingung erfüllt, die zu dem ersten Übergang gehört, welcher durch den ersten aus dem ersten Satz von Übergangsknoten definiert ist, und
Durchlaufen eines nächsten aus der ersten Mehrzahl von Knoten, welcher durch den ersten Übergang **gekennzeichnet** ist, auf Basis der Feststellung, dass das erste Zeichen die erste Bedingung erfüllt, die zu dem ersten Übergang gehört, welche durch den ersten aus dem ersten Satz von Übergangsknoten definiert wurde,
wobei der nächste aus der ersten Mehrzahl von Knoten den ersten Abschlussknoten aufweist, und
wobei das Durchlaufen der DFA-Gruppe weiterhin das Durchlaufen der DFA-Gruppe aufweist, um den ersten Abschlussknoten zu erreichen, welcher die erste Netzwerkanwendung identifiziert,
wobei das Verfahren weiterhin die Ausgabe einer ersten Anwendungskennung aufweist, die zu der ersten Netzwerkanwendung gehört, nachdem der erste Abschlussknoten erreicht wurde, um die erste Netzwerkanwendung als diejenige Netzwerkanwendung zu identifzieren, welcher das Paket entspricht, ohne den individuellen DFA zu durchlaufen.

4. Verfahren nach Anspruch 3,
wobei der nächste aus der ersten Mehrzahl von Knoten den zweiten Abschlussknoten aufweist,
wobei das Durchlaufen der DFA-Gruppe weiterhin aufweist:

Durchlaufen der DFA-Gruppe, um den zweiten Abschlussknoten zu erreichen, welcher den individuellen DFA identifiziert, und
nach Erreichen des zweiten Abschlussknotens Feststellen, dass das Paket das Segment des explosiven regulären Ausdrucks enthält, welcher durch den Signatur-Fingerabdruck definiert wurde,

wobei das Durchlaufen des individuellen DFA aufweist:

nach dem Erreichen des zweiten Abschlussknotens Identifizieren des ersten Zeichens in der extrahierten Kette,
Auswerten des ersten Zeichens bezüglich der zweiten Bedingung von einem aus dem zweiten Satz von Übergangsknoten, um festzustellen, ob das erste Zeichen die zweite Bedingung erfüllt, die zu dem zweiten Übergang gehört, welcher durch den ersten aus dem ersten Satz von Übergangsknoten definiert wurde,
Identifizieren des nächsten Zeichens, nachdem das erste Zeichen auf der Basis der Feststellung, dass das erste Zeichen die zweite Bedingung erfüllt, welche zu dem zweiten Übergang gehört, welcher durch den ersten aus dem zweiten Satz von Übergangsknoten definiert wurde, und
Durchlaufen zu einem nächsten aus der zweiten Mehrzahl von Knoten, welcher durch den zweiten Übergang definiert wurde, auf Basis der Feststellung, dass das erste Zeichen die zweite Bedingung erfüllt, die zu dem zweiten Übergang gehört, welcher durch den ersten aus dem zweiten Satz von Übergangsknoten definiert wurde.

5. Verfahren nach Anspruch 4, wobei der nächste aus der zweiten Mehrzahl von Knoten den dritten Abschlussknoten aufweist, und

wobei das Durchlaufen des individuellen DFA weiterhin das Durchlaufen des individuellen DFA aufweist, um den dritten Abschlussknoten zu erreichen, welcher die zweite Netzwerkanwendung kennzeichnet,

wobei das Verfahren weiterhin die Ausgabe einer zweiten Anwendungskennung aufweist, die zu der zweiten Netzwerkanwendung gehört, nachdem der dritte Abschlussknoten erreicht wurde, um die zweite Netzwerkanwendung als die Netzwerkanwendung zu kennzeichnen, welcher das Paket entspricht.

6. Verfahren nach Anspruch 1, welches aufweist:

Feststellen, ob das Paket einem neuen Strom bzw. Stream entspricht, wobei das Durchlaufen der DFA-Gruppe das Durchlaufen der DFA-Gruppe auf Basis der Feststellung aufweist, dass das Paket einem neuen Strom entspricht, und

Bestimmen einer Anwendungskennung auf Basis des Durchlaufens entweder der DFA-Gruppe oder des individuellen DFA, welcher die Netzwerkanwendung kennzeichnet, der das Paket entspricht.

7. Verfahren nach Anspruch 6,
wobei das Verfahren durch einen Router durchgeführt wird und
das Verfahren weiterhin aufweist:

Auswählen einer Dienstqualität- QoS -Klasse aus einer Mehrzahl von QoS-Klassen auf Basis der festgestellten Anwendungskennung,

Zuordnen der ausgewählten QoS-Klasse zu einem Paketstrom, welchem das Paket entspricht, und

Weiterleiten des Paketes gemäß der ausgewählten QoS-Klasse.

8. Verfahren nach Anspruch 6,
wobei das Verfahren durch eine Eindring-Erfassungs- und Verhinderungs- IDP- - Einrichtung durchgeführt wird, und
das Verfahren weiterhin aufweist:

Auswählen eines Profils aus einer Mehrzahl von Profilen auf Basis der festgestellten Anwendungskennung, wobei jedes aus der Mehrzahl von Profilen einen anderen Satz eines oder mehrerer aus einer Mehrzahl von Angriffsmustern spezifiziert,

Zuordnen des ausgewählten Profils zu einem Paketstrom, welchem das Paket entspricht,

Anwenden des Satzes von einem oder mehrerer aus der Mehrzahl von Angriffsmustern, die durch die ausgewählte Strategie für das Paket spezifiziert wurden, und

Weiterleiten des Paketes auf Basis der Anwendung des Satzes von einem oder mehreren aus der Mehrzahl von Angriffsmustern, welche durch die ausgewählte Strategie spezifiziert wurden.

9. Netzwerkgerät,
welches Einrichtungen zum Durchführen der Schritte und des Verfahrens aufweist, wie sie durch irgendeinen der Ansprüche 1-8 angegeben wurden.

10. Computer-lesbares Medium,
welches Befehle aufweist, die einen Prozessor veranlassen, die Schritte des Verfahrens durchzuführen, wie sie durch einen der Ansprüche 1-8 angegeben wurden.

11. Verfahren, welches aufweist:

Speichern von Daten (188) in einer Computereinrichtung, welche eine Mehrzahl von regulären Ausdrücken definieren,

Feststellen (198), ob jeder aus der Mehrzahl regulärer Ausdrücke eine Zustandsexplosion verursacht,

Klassifizieren jedes aus der Mehrzahl von regulären Ausdrücken in der Computereinrichtung als nicht-explosiv oder explosiv, je nach der Feststellung, wobei eine aus der Mehrzahl von regulären Ausdrücken als nicht-explosiv klassifiziert wird und ein anderer aus der Mehrzahl von regulären Ausdrücken als ein explosiver regulärer Ausdruck klassifiziert wird,

für jeden der explosiven regulären Ausdrücke, Extrahieren (208) eines entsprechenden Signatur-Fingerabdrucks aus dem explosiven regulären Ausdruck in der Computereinrichtung, wobei der Signatur-Fingerabdruck ein Segment des entsprechenden explosiven regulären Aufdrucks aufweist, welches den entsprechenden explosiven regulären Ausdruck eindeutig identifiziert,

Erzeugen (202) eines nicht-explosiven Deterministischen Endlichen Automaten, DFA, aus jedem der Mehrzahl von regulären Ausdrücken, die als nicht-explosiv klassifiziert wurden,

in der Computereinrichtung Erzeugen (206) eines individuellen DFA aus jedem aus der Mehrzahl von regulären Ausdrücken, die als explosiv klassifiziert wurden,

in der Computereinrichtung Erzeugen (210) eines Fingerabdruck-DFA, f-DFA, aus jedem der Signatur-Fingerabdrücke, die aus einem entsprechenden aus der Mehrzahl regulärer Ausdrücke extrahiert wurden, welche als explosiv klassifiziert wurden,

in der Computereinrichtung Verschmelzen (212) des nicht-explosiven DFA und des f-DFA, um eine DFA-Gruppe zu erzeugen, wobei die DFA-Gruppe zumindest einen Knoten aufweist, welcher die individuellen DFAs kennzeichnet und **dadurch** die DFA-Gruppe mit den individuellen DFAs verknüpft, und

automatisches Weiterleiten der DFA-Gruppe und der individuellen DFAs zu einem oder mehreren Netzwerkgeräten nach dem Erzeugen der DFA-Gruppe und der individuellen DFAs aus der Mehrzahl regulärer Ausdrücke, um so ein Anwendungs-Identifizierungs-Modul, welches in jedem der Netzwerkgeräte enthalten ist, mit der Mehrzahl regulärer Ausdrücke zu aktualisieren.

**12.** Verfahren nach Anspruch 11, wobei das Feststellen, ob jeder aus der Mehrzahl regulärer Ausdrücke eine Zustandsexplosion verursacht, aufweist:

Erzeugen eines temporären DFA aus einem aus der Mehrzahl regulärer Ausdrücke,

Bestimmen einer ersten Größe des temporären DFA hinsichtlich der Anzahl von Knoten, die in dem temporären DFA enthalten sind,

Bestimmen einer zweiten Größe eines Test-DFA hinsichtlich einer Anzahl von Knoten, die in dem Test-DFA enthalten sind,

Verschmelzen des temporären DFA mit dem Test-DFA, um einen verschmolzenen DFA zu erzeugen,

Bestimmen einer dritten Größe des verschmolzenen DFA hinsichtlich einer Anzahl von Knoten, die in dem verschmolzenen DFA enthalten sind,

Vergleichen der dritten Größe, die für die verschmolzene DFA bestimmt wurde, mit sowohl den ersten als auch den zweiten Größen, die für den temporären DFA bzw. den Test-DFA bestimmt wurden, und

auf Basis des Vergleiches Feststellen, dass einer aus der Mehrzahl von regulären Ausdrücken eine Zustandsexplosion verursacht.

**13.** Verfahren nach Anspruch 11, wobei das Extrahieren des entsprechenden Signatur-Fingerabdruckes aufweist:

Analysieren eines Startabschnittes eines aus der Mehrzahl regulärer Ausdrücke, die als explosiv klassifiziert wurden, um festzustellen, ob der Anfangsabschnitt ein erstes Erfordernis erfüllt, um als Signatur-Fingerabdruck geeignet zu erscheinen,

auf Basis der Feststellung, dass der Anfangsabschnitt als nicht geeignet erscheint, Analysieren eines Endabschnittes des betreffenden aus der Mehrzahl von regulären Ausdrücken, um festzustellen, ob der Endabschnitt das erste Erfordernis erfüllt, um als Signatur-Fingerabdruck geeignet zu erscheinen,

auf Basis der Feststellung, dass der Endabschnitt nicht geeignet erscheint, Analysieren eines mittleren Abschnittes des einen aus der Mehrzahl von regulären Ausdrücken, die als explosiv klassifiziert wurden, um festzustellen, ob der mittlere Abschnitt ein zweites Erfordernis erfüllt, welches sich von dem ersten Erfordernis unterscheidet, um als Signatur-Fingerabdruck geeignet zu erscheinen,

basierend auf der Feststellung, dass der mittlere Abschnitt als nicht geeignet erscheint, wiederholtes Analysieren des einen aus der Mehrzahl regulärer Ausdrücke, bis entweder der Anfangs-, End- oder Mittelabschnitt des betreffenden aus der Mehrzahl regulärer Ausdrücke ein Wahrscheinlichkeitserfordernis erfüllt, und

Extrahieren entweder des Anfangs-, des End- oder des Mittelabschnittes des einen aus der Mehrzahl von untersuchten regulären Ausdrücken nach der Feststellung, dass der betreffende Abschnitt das erste, das zweite oder das Wahrscheinlichkeitserfordernis erfüllt.

**14.** Rechnereinrichtung, welche Einrichtungen zum Durchführen der Schritte des Verfahrens aufweist, das durch einen der Ansprüche 11-13 angegeben wurde.

**15.** Computer-lesbares Medium, welches Befehle aufweist, die einen Prozessor veranlassen, die Schritte des Verfahrens durchzuführen, die durch einen der Ansprüche 11-13 angegeben sind.

**Revendications**

1. Procédé comprenant :

   un stockage de premières données (86) qui définissent un automate fini déterministe, DFA, de groupe dans lequel le DFA de groupe est formé par un dispositif de fusion de : (i) un DFA non-explosif individuel généré à partir d'une expression rationnelle non-explosive correspondante, et (ii) d'un DFA d'empreinte, f-DFA, généré à partir d'une empreinte signature correspondante, dans lequel l'expression rationnelle non-explosive comprend une expression rationnelle déterminée de manière à ne pas provoquer une explosion d'état pendant la fusion requise pour former le DFA de groupe, dans lequel l'empreinte signature comprend un segment d'une expression rationnelle explosive qui identifie de manière unique l'expression rationnelle explosive, et dans lequel l'expression rationnelle explosive comprend une expression rationnelle déterminée de manière à provoquer une explosion d'état pendant la fusion ;
   un stockage de deuxièmes données (88) qui définissent, pour l'expression rationnelle explosive, un DFA individuel indépendant du DFA de groupe, dans lequel l'empreinte signature identifie de manière unique l'expression rationnelle explosive à partir de laquelle le DFA individuel est généré ;
   une réception d'un paquet (90) ;
   une exploration (106), avant l'exploration du DFA individuel, du DFA de groupe afin de déterminer si le paquet inclut le segment de l'expression rationnelle explosive défini par l'empreinte signature ; et
   une exploration du DFA individuel associé à l'empreinte signature sur la base de la détermination du fait que le paquet inclut le segment de l'expression rationnelle explosive pour identifier une application réseau à laquelle le paquet correspond.

2. Procédé selon la revendication 1,
   dans lequel l'expression rationnelle non-explosive définit un premier modèle associé à une première application réseau,
   dans lequel l'expression rationnelle explosive définit un deuxième modèle associé à une deuxième application réseau,
   dans lequel le DFA de groupe inclut une première pluralité de noeuds interconnectés, dans lequel au moins certains noeuds de la première pluralité de noeuds interconnectés comprennent un premier ensemble de noeuds de transition, l'un des noeuds de la première pluralité de noeuds interconnectés comprend un premier noeud terminal et un autre noeud de la première pluralité de noeuds comprend un deuxième noeud terminal, dans lequel le premier ensemble de noeuds de transition définit une première transition permettant d'atteindre ledit autre noeud de la première pluralité de noeuds et une première condition associée à la première transition, dans lequel le premier noeud terminal est associé au DFA non-explosif et identifie la première application réseau, et dans lequel le deuxième noeud terminal est associé au f-DFA et identifie le DFA individuel généré à partir de l'expression rationnelle explosive, et
   dans lequel le DFA individuel inclut une deuxième pluralité de noeuds interconnectés, dans lequel au moins certains noeuds de la deuxième pluralité de noeuds interconnectés comprennent un deuxième ensemble de noeuds de transition et l'un des noeuds de la deuxième pluralité de noeuds comprend un troisième noeud terminal, dans lequel le deuxième ensemble de noeuds de transition définit une deuxième transition permettant d'atteindre un autre noeud de la deuxième pluralité de noeuds et une deuxième condition associée à la deuxième transition, dans lequel le troisième noeud terminal est associé au DFA explosif et identifie la deuxième application réseau.

3. Procédé selon la revendication 2, dans lequel l'exploration du DFA de groupe comprend :

   une extraction d'une chaine de caractères du paquet ;
   une identification d'un premier caractère dans la chaine extraite ;
   une évaluation du premier caractère par rapport à la première condition de l'un des noeuds du premier ensemble de noeuds de transition pour déterminer si le premier caractère satisfait à la première condition associée à la première transition définie par le premier noeud du premier ensemble de noeuds de transition ;
   une identification d'un caractère suivant après le premier caractère sur la base de la détermination du fait que le premier caractère satisfait à la première condition associée à la première transition définie par le premier noeud du premier ensemble de noeuds de transition ; et
   une exploration d'un noeud suivant de la première pluralité de noeuds identifié par la première transition sur la base de la détermination du fait que le premier caractère satisfait à la première condition associée à la première transition définie par le premier noeud du premier ensemble de noeuds de transition,
   dans lequel le noeud suivant de la première pluralité de noeuds comprend le premier noeud terminal, et
   dans lequel l'exploration du DFA de groupe comprend en outre une exploration du DFA de groupe pour atteindre le premier noeud terminal identifiant la première application réseau,
le procédé comprenant en outre une sortie d'un identificateur de première application associé à la première application réseau quand le premier noeud terminal est atteint pour identifier la première application réseau comme étant l'application réseau à laquelle le paquet correspond sans explorer le DFA individuel.

4. Procédé selon la revendication 3,
dans lequel le noeud suivant de la première pluralité de noeuds comprend le deuxième noeud terminal,
dans lequel l'exploration du DFA de groupe comprend en outre :

une exploration du DFA de groupe pour atteindre le deuxième noeud terminal identifiant le DFA individuel ; et
lorsque le deuxième noeud terminal est atteint, une détermination du fait que le paquet inclut le segment de l'expression rationnelle explosive défini par l'empreinte signature,

dans lequel l'exploration du DFA individuel comprend :

lorsque le deuxième noeud terminal est atteint, une identification du premier caractère dans la chaine extraite ;
une évaluation du premier caractère par rapport à la deuxième condition de l'un des noeuds du deuxième ensemble de noeuds de transition pour déterminer si le premier caractère satisfait à la deuxième condition associée à la deuxième transition définie par le premier noeud du deuxième ensemble de noeuds de transition ;
une identification du caractère suivant après le premier caractère sur la base de la détermination du fait que le premier caractère satisfait à la deuxième condition associée à la deuxième transition définie par le premier noeud du deuxième ensemble de noeuds de transition ; et
une exploration d'un noeud suivant de la deuxième pluralité de noeuds identifié par la deuxième transition sur la base de la détermination du fait que le premier caractère satisfait à la deuxième condition associée à la deuxième transition définie par le premier noeud du deuxième ensemble de noeuds de transition.

5. Procédé selon la revendication 4, dans lequel le noeud suivant de la deuxième pluralité de noeuds comprend le troisième noeud terminal, et
dans lequel une exploration du DFA individuel comprend en outre une exploration du DFA individuel pour atteindre le troisième noeud terminal identifiant la deuxième application réseau,
le procédé comprenant en outre une sortie d'un identificateur de deuxième application associé à la deuxième application réseau quand le troisième noeud terminal est atteint pour identifier la deuxième application réseau comme étant l'application réseau à laquelle le paquet correspond.

6. Procédé selon la revendication 1, comprenant en outre :

une détermination du fait que le paquet correspond à un nouveau flux de données, dans lequel une exploration du DFA de groupe comprend une exploration du DFA de groupe sur la base de la détermination du fait que le paquet correspond à un nouveau flux de données ; et
une détermination du fait qu'un identificateur d'application basé sur l'exploration du DFA de groupe ou du DFA individuel qui identifie l'application réseau à laquelle le paquet correspond.

7. Procédé selon la revendication 6,
dans lequel le procédé est exécuté par un routeur, et
le procédé comprenant en outre :

une sélection d'une classe de qualité de service déversoir, QoS, parmi une pluralité de classes de QoS sur la base de l'identificateur d'application déterminé ;
une association de la classe de QoS sélectionnée à un flux de paquets auquel le paquet correspond ; et
un réacheminement du paquet en fonction de la classe de QoS sélectionnée.

8. Procédé selon la revendication 6,
dans lequel le procédé est exécuté par un dispositif de détection et de prévention d'intrusion, IDP, et
le procédé comprenant en outre :

une sélection d'un profil parmi une pluralité de profils sur la base de l'identificateur d'application déterminé, dans lequel chaque profil de la pluralité de profils spécifie un ensemble différent d'un ou plusieurs modèles d'une pluralité de modèles d'attaque ;

une association du profil sélectionné à un flux de paquets auquel le paquet correspond ;

une application de l'ensemble d'un ou plusieurs modèles de la pluralité de modèles d'attaque spécifiés par la politique sélectionnée pour le paquet ; et

un réacheminement du paquet sur la base de l'application de l'ensemble d'un ou plusieurs modèles de la pluralité de modèles d'attaque spécifiés par la politique sélectionnée.

**9.** Périphérique de réseau comprenant un moyen pour exécuter les étapes du procédé décrit dans l'une quelconque des revendications 1 à 8.

**10.** Support lisible par une machine comprenant des instructions pour obliger un processeur à exécuter les étapes du procédé décrit dans l'une quelconque des revendications 1 à 8.

**11.** Procédé comprenant :

un stockage, à l'aide d'un dispositif informatique, de données (188) définissant une pluralité d'expressions rationnelles ;

une détermination (198) du fait que chaque expression de la pluralité d'expressions rationnelles provoque une explosion d'état ;

une classification, à l'aide du dispositif informatique, de chaque expression de la pluralité d'expressions rationnelles comme non-explosive ou explosive en fonction de la détermination, dans lequel une expression de la pluralité d'expressions rationnelles est classée comme une expression rationnelle non-explosive et une autre expression de la pluralité d'expressions rationnelles est classée comme une expression rationnelle explosive ;

pour chaque expression parmi les expressions rationnelles explosives, une extraction (208), à l'aide du dispositif informatique, d'une empreinte signature correspondante des expressions rationnelles explosives, dans lequel l'empreinte signature comprend un segment de l'une correspondante des expressions rationnelles explosives qui identifie de manière unique l'une correspondante des expressions rationnelles explosives ;

une génération (202), à l'aide du dispositif informatique, d'un automate fini déterministe, DFA, non-explosif à partir de chaque expression de la pluralité d'expressions rationnelles classées comme non-explosives ;

une génération (206), à l'aide du dispositif informatique, d'un DFA individuel à partir de chaque expression de la pluralité d'expressions rationnelles classées comme explosives ;

une génération (210), à l'aide du dispositif informatique, d'un DFA d'empreinte, f-DFA, à partir de chacune des empreintes signatures extraites de l'une correspondante des expressions de la pluralité d'expressions rationnelles classées comme explosives ;

une fusion (212), à l'aide du dispositif informatique, du DFA non-explosif et

du f-DFA pour générer un DFA de groupe, dans lequel le DFA de groupe comprend au moins un noeud qui identifie les DFA individuels et relie ainsi le DFA de groupe aux DFAs individuels ; et

un réacheminement automatique du DFA de groupe et des DFAs individuels vers un ou plusieurs périphériques de réseau après la génération du DFA de groupe et des DFA individuels à partir de la pluralité d'expressions rationnelles afin de mettre à jour un module d'identification d'application inclus dans chacun des périphériques de réseau avec la pluralité d'expressions rationnelles.

**12.** Procédé selon la revendication 11, dans lequel la détermination du fait que chaque expression de la pluralité d'expressions rationnelles provoque une explosion d'état comprend :

une génération d'un DFA temporaire à partir de l'une des expressions de la pluralité d'expressions rationnelles ;

une détermination d'une première taille du DFA temporaire en terme de nombre de noeuds inclus dans le DFA temporaire ;

une détermination d'une deuxième taille d'un DFA de test en terme de nombre de noeuds inclus dans le DFA de test ;

une fusion du DFA temporaire et du DFA de test pour générer un DFA fusionné ;

une détermination d'une troisième taille du DFA fusionné en terme de nombre de noeuds inclus dans le DFA fusionné ;

une comparaison de la troisième taille déterminée pour le DFA fusionné avec les première et deuxième tailles déterminées respectivement pour le DFA temporaire et pour le DFA de test ; et

une détermination du fait qu'une expression de la pluralité d'expressions rationnelles provoque une explosion d'état sur la base de la comparaison.

**13.** Procédé selon la revendication 11, dans lequel l'extraction de l'empreinte signature correspondante comprend :

une analyse d'une portion de début d'une expression de la pluralité d'expressions rationnelles classées comme explosives pour déterminer si la portion de début répond à une première exigence pour être qualifiée en tant que l'empreinte signature ;

une analyse, sur la base de la détermination du fait que la portion de début n'est pas qualifiée, d'une portion finale de cette expression de la pluralité d'expressions rationnelles pour déterminer si la portion finale répond à une première exigence pour être qualifiée en tant que l'empreinte signature ;

une analyse, sur la base de la détermination du fait que la portion finale n'est pas qualifiée, d'une portion centrale de ladite une expression de la pluralité d'expressions rationnelles classées comme explosives pour déterminer si la portion centrale répond à une deuxième exigence différente de la première exigence pour être qualifiée en tant que l'empreinte signature ;

une analyse itérative, sur la base de la détermination du fait que la portion centrale n'est pas qualifiée, de ladite une expression de la pluralité d'expressions rationnelles jusqu'à ce que la portion de début, la portion finale ou bien la portion centrale satisfasse à une exigence de probabilité ; et

une extraction de la portion de début, de la portion finale ou bien de la portion centrale de ladite une expression de la pluralité d'expressions rationnelles pendant l'analyse lorsqu'il est déterminé que la portion respective satisfait à la première exigence, à la deuxième exigence ou bien à l'exigence de probabilité.

14. Dispositif informatique comprenant un moyen pour exécuter les étapes du procédé décrit dans l'une quelconque des revendications 11 à 13.

15. Support lisible par une machine comprenant des instructions pour obliger un processeur à exécuter les étapes du procédé décrit dans l'une quelconque des revendications 11 à 13.

10

PUBLIC
NETWORK
16

ROUTER
12

AI MODULE
26A

FIREWALL
20

PRIVATE NETWORK
18

IDP DEVICE
14

AI MODULE
26B

SWITCH
22

COMPUTING
NODE
24A

●●●

COMPUTING
NODE
24N

FIG. 1

**FIG. 2**

EP 2 214 115 B1

# INTRUSION DETECTION / PREVENTION (IDP) DEVICE
## 14

**CONTROL UNIT** __64__

ADMIN __42__

UI MODULE __66__

### CLASSIFIER MODULE __70__

**AI MODULE** __26A__

**GROUP DFA** __56__

NON-EXPLOSIVE DFA __60__

F-DFA __62__

INDIVIDUAL DFA __58__

75

FLOW TABLE __78__

80

POLICY __80A__

POLICY __80N__

INCOMING TRAFFIC

76

VALIDITY MODULE __74__

QUEUES __84__

SERVICING ENGINE __72__

PATTERNS __82__

OUTGOING TRAFFIC

81

**FIG. 3**

EP 2 214 115 B1

**FIG. 4**

RECEIVE PACKET ⌐110

DETERMINE FLOW TO WHICH PACKET CORRESPONDS ⌐112

NEW FLOW? ⌐114 → NO → ACCESS FLOW TABLE TO DETERMINE ASSOCIATED QOS CLASS ⌐116

YES

DETERMINE APP TO WHICH PACKET CORRESPONDS ⌐118

MATCH? ⌐120 → NO → DETERMINE QOS CLASS AS BEST EFFORT QOS CLASS ⌐124

YES

ACCESS QOS PROFILES TO DETERMINE QOS CLASS ASSOCIATED WITH MATCHED APPLICATION ⌐122

UPDATE FLOW WITH DETERMINED QOS CLASS ⌐126

FORWARD PACKET IN ACCORDANCE WITH ASSOCIATED QOS CLASS ⌐117

FIG. 5

```
                                                              ┌─130
                    ┌──────────────────────────────┐
                    │        RECEIVE PACKET         │
                    └──────────────────────────────┘
                                    │               ┌─132
                    ┌───────────────▼──────────────┐
                    │   DETERMINE FLOW TO WHICH    │
                    │     PACKET CORRESPONDS        │
                    └──────────────────────────────┘
                                    │                           ┌─136
                              ┌─134 │            ┌──────────────────────────────┐
                          ◇───▼───◇    NO        │   ACCESS FLOW TABLE TO        │
                        ◇   NEW FLOW?  ◇─────────▶│   DETERMINE PREVIOUSLY        │
                          ◇───────◇              │   MATCHED APPLICATION         │
                                │                └──────────────────────────────┘
                              YES│                           │
                    ┌───────────▼──────────────┐  ┌─138      │
                    │   DETERMINE APP TO WHICH  │            │
                    │     PACKET CORRESPONDS    │            │
                    └──────────────────────────┘            │
                                │               ┌─140        │                     ┌─144
                          ◇─────▼────◇    NO     ┌──────────────────────────────┐
                        ◇   MATCH?   ◇──────────▶│   UPDATE FLOW TABLE TO        │
                          ◇────────◇            │   ASSOCIATE PACKET FLOW WITH  │
                                │               │   UNKNOWN APPLICATION         │
                              YES│              └──────────────────────────────┘
                    ┌───────────▼──────────────┐  ┌─142       │
                    │   UPDATE FLOW TABLE TO    │             │
                    │   ASSOCIATE PACKET FLOW   │             │
                    │   WITH MATCHED APPLICATION│             │
                    └──────────────────────────┘             │
                                │               ┌─146         │
                    ┌───────────▼──────────────┐◀────────────┘
                    │   TAG PACKET WITH MATCHED │
                    │       APPLICATION         │
                    └──────────────────────────┘
                                │               ┌─148
                    ┌───────────▼──────────────┐
                    │   SELECT PATTERNS BASED ON│
                    │           TAG             │
                    └──────────────────────────┘
                                │               ┌─150
                    ┌───────────▼──────────────┐
                    │   APPLY SELECTED PATTERNS │
                    │       TO PACKET           │
                    └──────────────────────────┘
                                │               ┌─152              ┌─154
                          ◇─────▼────◇   YES     ┌──────────────────────────────┐
                        ◇   MATCH?   ◇──────────▶│   PERFORM SECURITY ACTION     │
                          ◇────────◇            │   (E.G., DROP PACKET)         │
                                │               └──────────────────────────────┘
                              NO│                ┌─156
                    ┌───────────▼──────────────┐
                    │       FORWARD PACKET      │
                    └──────────────────────────┘
```

FIG. 6

158

FIG. 7

COMPUTING DEVICE
164

CONTROL UNIT
166

SIGANTURES
178

REGULAR
EXPRESSION
178A

REGULAR
EXPRESSION
178N

PARSING
MODULE
168

180

CLASSIFICATION
MODULE
170

184

EXPLOSIVE

FINGERPRINT
EXTRACTION
MODULE
172

182

NON-EXPLOSIVE

186

FINGERPRINT

184

EXPLOSIVE

DFA CONSTRUCTION MODULE
174

60

NON-EXPLOSIVE
DFA

62

F-DFA

DFA MERGE MODULE
176

GROUP DFA
56

NON-EXPLOSIVE
DFA
60

F-DFA
62

INDIVIDUAL DFA
58

FIG.8

```
                                                    ┌─ 188
┌──────────────────────────────────────┐
│      STORE DATA DEFINING REGEXES       │
└──────────────────────────────────────┘
                    │                     ┌─ 190
                    ▼
┌──────────────────────────────────────┐
│       PERFORM INITIAL PARSING ON       │
│              EACH REGEX                 │
└──────────────────────────────────────┘
                    │                     ┌─ 192
                    ▼
┌──────────────────────────────────────┐
│     CONSTRUCT TEMPORARY DFA FOR        │
│         EACH PARSED REGEX              │
└──────────────────────────────────────┘
                    │                     ┌─ 194
                    ▼
┌──────────────────────────────────────┐
│    MERGE TEMPORARY DFA WITH TEST       │
│                DFA                      │
└──────────────────────────────────────┘
                    │                     ┌─ 196
                    ▼
┌──────────────────────────────────────┐
│     CALCULATE EXPLOSION FACTOR          │
│    (BETA) BASED ON MERGED DFA          │
└──────────────────────────────────────┘
                    │        ┌─ 198
                    ▼                                          ┌─ 200
            ◇─────────────◇         NO      ┌──────────────────────────────┐
            ◇  BETA > 1?  ◇ ─────────────▶ │   CLASSIFY REGEX AS NON-       │
            ◇─────────────◇                 │         EXPLOSIVE              │
                    │                        └──────────────────────────────┘
                  YES│            ┌─ 204                     │      ┌─ 202
                    ▼                                         ▼
┌──────────────────────────────────────┐    ┌──────────────────────────────┐
│      CLASSIFY REGEX AS EXPLOSIVE       │    │   GENERATE NON-EXPLOSIVE       │
└──────────────────────────────────────┘    │    DFA BASED ON REGEX         │
                    │                        └──────────────────────────────┘
                    ▼         ┌─ 206                          │
┌──────────────────────────────────────┐                     │
│   GENERATE INDIVIDUAL DFA FROM         │                     │
│         EXPLOSIVE REGEX               │                     │
└──────────────────────────────────────┘                     │
                    │         ┌─ 208                          │
                    ▼                                          │
┌──────────────────────────────────────┐                     │
│      EXTRACT FINGERPRINT OF REGEX      │                     │
└──────────────────────────────────────┘                     │
                    │         ┌─ 210                          │
                    ▼                                          │
┌──────────────────────────────────────┐                     │
│       GENERATE F-DFA BASED ON          │                     │
│            FINGERPRINT                 │                     │
└──────────────────────────────────────┘                     │
                    │         ┌─ 212                          │
                    ▼                                          │
┌──────────────────────────────────────┐                     │
│   MERGE F-DFA AND NON-EXPLOSIVE        │◀────────────────────┘
│   DFA TO GENERATE GROUP DFA           │
└──────────────────────────────────────┘
```

## FIG. 9

FIG. 10

FIG. 11

FIG. 12

EP 2 214 115 B1